# EUROPEAN PATENT APPLICATION

(11) **EP 2 653 037 A1**
(43) Date of publication of application: **23.10.2013**
(21) Application number: 13177280.8
(22) Date of filing: 23.03.2011
(51) Int. Cl.: A23G 3/52, A23G 4/00, A23G 3/00, A23G 3/54, A23G 4/20

(54) **Confectionery products**

(30) Priority: 23.03.2010 US 316442 P; 23.03.2010 GB 201004899
(62) Divisional of application: 11718142.0
(71) Applicant: Cadbury UK Limited, Birmingham, West Midlands B30 2LU (GB)
(72) Inventor: BINGLEY, Carole Ann, Reading, Berkshire RG4 8SE (GB); BUFTON, Andrew, Aylesbury, Buckinghamshire HP22 5UR (GB); CLARKE, Peter, Crowthorne, Berkshire RG45 7NE (GB); MARSHALL, Sarah, Newbury, West Berkshire RG14 2FB (GB); NORTON, Clive Richard Thomas, Shinfield, West Berkshire RG2 9EF (GB); SUTARIA, Devang, Landing, NJ New Jersey 07850 (US); SAKANISHI, Hideki, Shinagawa-ku, Tokyo 141 8656 (JP)
(74) Representative: Wilson Gunn

(57) **Abstract**

The present invention relates to a confectionery product comprising an extruded body portion, the body portion being formed from a material which is liquid during extrusion and which has a plurality of capillaries disposed therein, the capillaries having an average width or diameter of no more than 3millimetres. The invention also relates to a process of manufacturing the same.

## Description

### Technical Field of the Invention

The present invention relates to confectionery and method of production thereof. In particular, the invention relates to confectionery comprising a plurality of capillaries which may contain a gas, a liquid, a solid, or a combination thereof.

### Background to the Invention

It is desirable to produce confectionery formed of different components, so as to increase sensory pleasure. A number of confectionery products exist, which have a flavoured liquid or syrup centre which is released upon chewing. For example, W02007056685 discloses an apparatus and method for the continuous production of centre-filled confectionery products in the format of a continuous extrudate having a plurality of centre-filled confectionery ropes. Whilst a product formed from such an apparatus does increase sensory pleasure, the period of pleasure is often short lived as the centre is released quickly and/or degraded. Some embodiments of the present invention can provide a confectionery product which can release a fluid or solid centre over an extended period of time.

There is also a demand for providing confectionery having a reduced fat or sugar content. Some embodiments of the present invention can provide a confectionery product which can be produced having a lowered fat or sugar content, whilst still maintaining an excellent sensory pleasure.

It is an aim of an embodiment or embodiments of the present invention to overcome one or more of the problems of the prior art. It is also an aim of some embodiments of the present invention to provide a confectionery having an extended fill release profile and a method of manufacture thereof. It is also a further aim of some embodiments of the present invention to provide a confectionery which has a reduced fat and/or sugar profile and a method of manufacture thereof.

### Summary of the Invention

There are provided multiple confectionery products and methods.

One embodiment is confectionery product, comprising: an extruded body portion; and a plurality of capillaries disposed in the extruded body portion; wherein one or more of the capillaries is characterized by a capillary width or diameter and is partially filled with fibres comprising a bulk sweetener; and wherein the fibres are characterized by a fibre width or diameter that is about 1% to about 70% of the capillary width or diameter.

Another embodiment is a confectionery product, comprising: an extruded body portion; and a plurality of capillaries disposed in the extruded body portion; wherein one or more of the capillaries is at least partially filled with a fill material that exhibits a colour change when the confectionery product is consumed.

Another embodiment is a confectionery product, comprising: an extruded body portion; and a plurality of capillaries disposed in the extruded body portion; wherein one or more of the capillaries is at least partially filled with a gasified confectionery composition.

Another embodiment is a confectionery product, comprising: a first confectionery layer; a second confectionery layer; and a third confectionery layer between and in contact with the first and second confectionery layers; wherein the third confectionery layer comprises an extruded body portion, and a plurality of capillaries disposed in the extruded body portion.

Another embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a fill material comprising at least 20 weight percent fat.

Another embodiment is a chewing gum product, comprising: an extruded body portion; and a plurality of capillaries disposed in the extruded body portion; wherein the extruded body portion comprises a first gum base composition; and wherein one or more of the capillaries comprises a second gum base composition different from the first gum base composition.

Another embodiment is a confectionery product, comprising: an extruded body portion; and a plurality of capillaries disposed in the extruded body portion; wherein the extruded body portion comprises a confectionery composition having a first flexural modulus measured at 25°C according to ASTM D790; and wherein one or more of the capillaries is at least partially filled with a fill material having a second flexural modulus measured at 25°C according to ASTM D790; wherein the second flexural modulus is at least 10% greater than the first flexural modulus.

Another embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a gummy confectionery composition.

Another embodiment is a chewing gum product, comprising: an extruded body portion; and a plurality of capillaries disposed in the extruded body portion; wherein the extruded body portion comprises a chewing gum composition and an exposed surface; wherein the plurality of capillaries comprises a first group of capillaries distributed around the periphery of the extruded body portion and a second group of capillaries distributed interior to said first group; wherein the first group of capillaries comprises a first confectionery composition comprising a first flavour; and wherein the second group of capillaries comprises a second confectionery composition comprising a second flavour different from the first flavour.

Another embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a fill material capable of expanding when chewed.

Another embodiment is a chocolate confectionery product, comprising: an extruded body portion; and a plurality of capillaries disposed in the extruded body portion; wherein the extruded body portion comprises a body portion confectionery composition comprising cocoa solids and characterized by a body portion melting temperature; wherein the plurality of capillaries comprises a first group of at least two capillaries at least partially filled with a first capillaries confectionery composition and characterized by a first capillaries melting temperature different from the body portion melting temperature; and wherein the plurality of capillaries comprises a second group of at least two capillaries, different from the first group of at least two capillaries, at least partially filled with a second capillaries confectionery composition and characterized by a second capillaries melting temperature different from the body portion melting temperature and the first capillaries melting temperature.

Another embodiment is a method of forming a chocolate confectionery product, comprising: extruding a confectionery material to form an extruded body portion, and a plurality of capillaries disposed in the extruded body portion; cutting the extrudate to form a rope; and processing the rope in a ball former to form individual pieces of chocolate confectionery product.

Another embodiment is a chocolate confectionery product, comprising: an extruded body portion; and a plurality of capillaries disposed in the extruded body portion; wherein the extruded body portion comprises a body portion confectionery composition comprising cocoa solids; wherein one or more of the capillaries is at least partially filled with a fill material comprising hazelnut flavour.

Another embodiment is a chocolate confectionery product, comprising: an extruded body portion; and a plurality of capillaries disposed in the extruded body portion; wherein the extruded body portion comprises a confectionery composition comprising a coconut flavour; and a chocolate layer at least partially surrounding the extruded body portion; wherein the chocolate layer comprises a chocolate composition comprising cocoa solids; and wherein one or more of the capillaries is at least partially filled with a fill material comprising cherry flavour.

Another embodiment is a chocolate confectionery product, comprising: an extruded body portion; and a plurality of capillaries disposed in the extruded body portion; wherein the extruded body portion comprises a confectionery composition comprising cocoa solids; wherein the extruded body portion is characterized by a non-circular cross-sectional shape; and wherein one or more of the capillaries is characterized by a non-circular cross-sectional shape approximating the cross-sectional shape of the extruded body portion.

Another embodiment is a packaged chocolate confectionery product, comprising: an extruded body portion; a plurality of capillaries disposed in the extruded body portion; and a dispensing package containing the extruded body portion and the plurality of capillaries; wherein the extruded body portion comprises a first confectionery composition comprising cocoa solids; wherein the first confectionery composition has a viscosity of about 100,000 to about 1,000,000 centipoise at 25°C; wherein one or more of the capillaries is at least partially filled with a second confectionery composition different from the first confectionery composition; and wherein the second confectionery composition has a viscosity of about 5,000 to about 1,000,000 centipoise at 25°C.

Another embodiment is a chewing gum product, comprising: an extruded body portion; and a plurality of capillaries disposed in the extruded body portion; wherein the extruded body portion comprises a gum base composition comprising an elastomer; and wherein one or more of the capillaries is at least partially filled with an elastomer-free fill material.

The present invention therefore provides for a confectionery product which can be used in confectionery having an extended release of a material inserted into the capillaries, or a confectionery product having a large voidage so as to reduce the amount confectionery material used in the product, whilst maintaining the overall size of the product.

### Detailed Description of the Invention

It should be understood that the term "plurality" is intended to mean two or more. In some embodiments, a plurality is 3 or more, or 4 or more, or 5 or more, or 6 or more, or 7 or more. There is no particular upper limit on the number associated with "plurality". In the context of the phrase "plurality of capillaries", numbers up to 50 and higher are contemplated.

It should be understood that the term "capillary" generally refers to a conduit or space created within the body of the product by an extrusion or other forming process. The capillary typically contains matter, and that matter can be in the form of a gas, a liquid, a solid, or a mixture thereof.

It should be understood that the term "voidage" generally refers to the volume percent of the capillary volume relative to the sum of the capillary volume and the extruded body portion volume. That is, voidage (%) = 100 x capillary volume / (capillary volume + extruded body portion volume). In some embodiments, the extruded body portion volume does not include any central region volume created by certain dies, such as an annular die.

It should be understood that the term "liquid" is intended to mean that the material is capable or has a readiness to flow, including gels, pastes and plasticized chocolate. Furthermore, this term is intended to include (but not limited to) those materials which may be "molten" during extrusion and the skilled addressee will understand that the term "molten" means that the material has been reduced to a liquid form or a form which exhibits the properties of a liquid.

The body portion may be at least partially or substantially solid, so that it can no longer be considered to flow in a liquid form.

The material used to produce the body portion may comprise a number of materials commonly use in the production of confectionery - such as candy, gum, and chocolate, etc.

In some embodiments, the body portion is chocolate. Suitable chocolate includes dark, milk, white, and compound chocolate. In some embodiments, the body portion is chewing gum, bubble gum, or gum base. In other embodiments, the body portion is candy. Suitable candy includes hard candy, chewy candy, gummy candy, jelly candy, toffee, fudge, nougat, and the like.

In some embodiments, the capillaries disposed in the extruded body portion can be at least partially filled with a fill material, such as, but not limited to, a liquid fill material. The capillaries each may contain one or more fill materials that are the same or different and different capillaries may contain fill materials with different colours, flavours, flavour combinations, colour combinations, flavour intensities, colour intensities, viscosities, solubilities, densities, textures, fill percentages, materials, material combinations (e.g., combinations of liquid and suspended particulates within the liquid), material ratios, functional strengths, aftertastes, sensory profiles, temporal profiles, mechanisms of action (chemical, mechanical, trigeminal, receptor, exothermic, endothermic), locations of action (e.g. tongue, throat), odours, hydrophobicities, hygrophobicities, water activities, barrier properties, reactions to air and/or water, chemical stabilities, changes over time (e.g., solid to liquid, liquid to solid), shelf life characteristics, crystal structures, etc.

In some embodiments, liquid fill materials can include particulates suspended therein, such as, but not limited to, sugars, fruit pieces, nut pieces, powdered ingredients and the like.

In some embodiments, two or more capillaries may have the same or different size, cross-section (e.g., circle, oval, square, triangular, star-shaped), cross-sectional area, circumference, etc. One or more capillaries also may be continuous or discontinuous within the body portion.

The capillaries may extend along the substantially entire length of the body portion, but may in some embodiments extend no less than 75%, 80%, 90%, 95%, or 99% along the length of the body portion (for example, when it is desired to seal the ends of the body portion). If the capillaries extend along the entire length of body portion, suitably the ends of the capillaries are visible at one or more ends of the body portion.

One or more of the capillaries may be filled with a material which is different from that of the material used to form the body portion. Different capillaries may incorporate different materials if desired. The capillaries may be filled with a fluid material. Such a fluid may comprise a liquid. The capillaries may be filled with a material which is solid at a room temperature and fluid at a temperature greater than room temperature. For example, a molten chocolate may be incorporated into the capillaries and allowed to set when cooled to room temperature. It will be apparent to the skilled addressee that room temperature is commonly regarded as around 20°C. The capillaries may be filled with a material which is deposited as a liquid and which subsequently solidifies. In such embodiments, the solidification may be dependent or independent of heat. It will be apparent that solidification of a liquid filled capillary may be achieved in a number of ways. For example solidification may take place due to one or more of the following:
Cooling - the filling may be molten when deposited which then cools to a solid at room temperature;
Heating - the filling may be liquid when deposited, and the heat of the extruded body portion sets the filling (e.g., pumping egg albumen into a hot hard candy extruded body portion will set the egg on contact);
Drying - the filling may be a solution that dries into a solid (e.g., the moisture from the solution is absorbed into the extruded body portion);
Solvent loss - the filling may be in a solvent, whereby the solvent is absorbed into the extruded body portion, leaving a solid;
Chemical reaction - the filling may be deposited as a liquid but reacts or "goes off' into a solid;
Cross-linking - the filling may form a constituents for a cross-linked material due to mixing and/or heating; and
Time - the filling may simply set with time (e.g., a solution of sugars and gelatine will eventually set over time).

Suitable filling materials for the capillaries include, but are not limited to, aqueous media, fats, chocolate, caramel, cocoa butter, fondant, syrups, peanut butter, jam, jelly, gels, truffle, praline, chewy candy, hard candy, and any combination or mixture thereof.

If desired, the product may further comprise a coating portion to envelop the body portion. The skilled addressee will appreciate that a number of coatings could be employed - for example chocolate, gum, candy, and sugar, etc.

The body portion may be connected to one or more further confectionery portions. In some embodiments, the body portion is sandwiched between confectionery materials or may be connected or laminated to one or more confectionery layers. The further confectionery portion or portions may or may not contain inclusions, liquid-filled beads, etc.

In some embodiments, the capillaries are distributed substantially uniformly throughout the body portion, and they may be spaced evenly apart from adjacent capillaries. In other embodiments, the capillaries may be distributed in pre-defined configurations within the body portion, such as around the periphery of the body portion, or in groups at one or more locations within the body. In some embodiments the body portion has a circular, elliptical, polygonal, or semi-circular cross-section. The body portion may be shaped in the form of a cylinder, a rope, a filament, a strip, a ribbon or the like, or may be shaped in the form of a standard confectionery product such a chocolate bar, or chewing gum slab, pellet, ball, stick or ribbon, for example. The body portion may be irregular or regular in shape. Furthermore, the body portion may be formed in potentially any shape, for example in the shape of an object, cartoon character, or an animal to name a few.

Two or more capillaries may have different widths or diameters. Such an arrangement will allow, if desired, for different quantities of different fill materials to be incorporated into different capillaries. Furthermore, the two or more capillaries may have different cross-sectional profiles. For example, the confectionery product may have capillaries having cross-sectional shapes including stars and triangles, or different shapes of animals, etc.

In an embodiment, the capillaries in the body portion result in a voidage in the range of 1-99% of the extrudate, or in the range of 5 - 99% of the extrudate. The voidage may be in the range of 10 - 60%, 20 - 50%, 30 - 45%, or 35 - 40%. The voidage may also be in intermediate points in these ranges, for example, 5 - 40%, 5 - 45%, 5 - 50%, 5 - 60%, 10 - 40%, 10 - 45%, 10 - 50%, 10 - 99%, 20 - 60%, 20 - 45%, 20 - 40%, 20 - 60%, 20-99%, 30 - 40 %, 30 - 50%, 30 - 60 % or 30 - 99%. The voidage may be up to 99%, 95%, 90%, 80%, 60%, 50%, 45%, 35%, 30%, 20%, 10%, or 5%. The voidage may be over 5%, 10%, 15%, 20%, 25%, 30%, 35%, 40%, 45%, 50%, 55%, 60%, 65%, 70%, 75%, 80%, 85%, 90% or 95%.

The incorporation of capillaries of a small cross-sectional width or diameter enables the capillaries to entrain contrasting or complementary confectionery materials into the body portion whilst avoiding the need to incorporate large centre-fill areas which may be prone to leakage through, or out of, the confectionery product. The use of a plurality of capillaries also enables two or more materials to be incorporated into the confectionery product to give multiple textures, tastes, colours, and/or mouth-feel sensations, throughout the whole confectionery product.

In some embodiments, the capillaries have a diameter or width of no more than 2 millimetres, 1 millimetre, 0.5 millimetre, 0.25 millimetre, or less. It is possible to have capillaries having a diameter or width of no more than 100 micrometres, 50 micrometres, or 10 micrometres.

The confectionery product may comprise a first extruded portion and a second extruded portion, wherein each portion has a plurality of capillaries disposed therein, and the capillaries of the first and second portions are:
a) discontinuous; and/or
b) continuous and oriented in more than one direction.

The capillaries of each portion may be formed substantially parallel to one another. In one embodiment, the first and second portions are in a stacked configuration, such that the capillaries of the first and second portions are substantially parallel to each other. In an alternative embodiment, the first and second portions are in a folded configuration. In yet another alternative embodiment, the first and second portions are discontinuous and the capillaries are oriented in a random configuration in relation to one another. In some embodiments, the capillaries of the first and/or second portions have a diameter or width of no more than 3 millimetres, 2 millimetres, 1 millimetre, 0.5 millimetre, 0.25 millimetre, or less. It is possible to have capillaries having a diameter or width as low as 100 micrometres, 50 micrometres, or 10 micrometres. The capillaries of the first and/or second portions may have different widths or diameters.

There may be further portions in addition to the first and second portions, which may or may not comprise capillaries. In one embodiment, the confectionery product comprises the first portion separated from the second portion by one or more further portions that may or may not contain capillaries.

The first and second portions may be as described hereinabove for the body portion. The first and second portions may comprise the same material or different materials. For example, the first portion may be chocolate and the second portion candy. The capillaries in each of the first and second portions may be filled with the same or different materials. One or more capillaries in the first and/or second portions may be filled with different material(s) to other capillaries in the first and/or second portion.

According to a further embodiment of the invention, there is provided a confectionery product comprising an extruded body portion having a plurality of capillaries disposed therein, wherein each capillary is separated from each adjacent capillary by a wall formed from the extruded body portion and wherein the wall between each capillary has a thickness of no more than the width or diameter of the capillaries.

In some embodiments of the present invention, the plurality of capillaries disposed in the body portion of the confectionery product may be anywhere from 2-50 capillaries, from 5-50 capillaries, from 10-40 capillaries, from 20-40 capillaries or from 30-40 capillaries. The capillaries may result in a voidage in the range of about 5-40%, or about 10-40%, or about 20-40%, or about 30-40%, of the extrudate. The capillaries may have an average diameter or width of about 0.1-5 millimetres. In some embodiments, such as some embodiments that do not employ further stretching of the extrudate, the average diameter or width of the capillaries may be, for instance, about 0.5-5 millimetres. In some other embodiments, such as some embodiments employing further stretching or drawing of the extrudate, the average diameter or width of the capillaries may be reduced, for instance, to about 0.1-1 millimetre.

In some embodiments, the wall between each capillary may have a thickness of about 0.1-3 millimetres. In some embodiments, such as some embodiments that do not employ further stretching of the extrudate, the wall between each capillary may have a thickness of about 0.5-3 millimetres. In some other embodiments, such as some embodiments employing further stretching of the extrudate, the wall between each capillary may be reduced to a thickness of about 0.1-2.5 millimetres, or about 0.1-1 millimetre in some embodiments.

In some embodiments, the plurality of capillaries may be centrally grouped within the extruded body portion and surrounded by an outer wall that extends to the outer surface of the body portion. In such embodiments, the outer wall may have a thickness of about 0.1-5 millimetres. In some embodiments, such as some embodiments that do not employ further stretching of the extrudate, the outer wall may have a thickness of about 0.5-5 millimetres. In some other embodiments, such as some embodiments employing further stretching of the extrudate, the outer wall may be reduced to a thickness of about 0.1-1 millimetres.

In addition, in some embodiments, the final piece weight of the individual confectionery products formed from the extrudate may be about 1-10 grams and the cross-sectional size may be anywhere from about 5-30 millimetres, for instance, a circular cross-section having a diameter of about 10-30 millimetres.

According to a yet another embodiment of the present invention, there is provided a confectionery product comprising an extruded body portion, the body portion having a plurality of capillaries disposed therein, the capillaries having a width or diameter of less than 0.2 millimetre.

According to a yet another embodiment of the present invention, there is provided a confectionery product comprising an extruded body portion, the body portion having a plurality of capillaries disposed therein, the capillaries in the body portion resulting in a voidage in the range of 5 - 99% of the extrudate.

The skilled addressee will of course realise that these subsequent embodiments may incorporate features which have already been discussed with reference to the initial embodiment.

According to a further embodiment, there is provided a process for manufacturing a confectionery product comprising a body portion, having a plurality of capillaries disposed therein, the process comprising the step of:
a) extruding an extrudable confectionery material which is liquid during extrusion with a plurality of capillaries disposed therein, wherein the capillaries have a width or diameter of no more than 3 millimetres.

In some embodiments, the method may include an extra step selected from:
b) cutting the extrudate into two or more pieces having a plurality of capillaries disposed therein and forming a confectionery product incorporating the pieces; and/or
c) folding the extrudate and forming a confectionery product incorporating the folded extrudate.

Any of the above processes may further comprise the step of depositing a filling in at least part of one or more of the capillaries. The deposition of the filling may be during the step of extrusion - but can also take place after extrusion. In an embodiment, the filling comprises a fluid. The fluid may comprises a liquid, or a material which is liquid at a temperature greater than room temperature. The fluid may solidify after deposition if desired.

Any of the processes may further comprise the step of quench cooling the extrudate after extrusion. The quench cooling may utilise a fluid, such as air, an oil or liquid nitrogen-but other methods of quench cooling will also be apparent to the skilled addressee.

Any of the processes may further comprise the step of, after extrusion, stretching or drawing the extrudate. Stretching or drawing the extrudate may be undertaken by a number of means, for example passing the extrudate over, or through conveyor belts or rollers operating at different speeds, so as to stretch the extrudate. By employing this additional step, extrusions having capillaries of a larger diameter can be undertaken, which can be reduced in diameter gradually over time so as to produce an extrudate with smaller capillaries which would have been more difficult to produce. Commonly, capillaries having a bore size of 2 millimetres or more will be produced during extrusion and these capillaries will be reduced significantly by stretching the extrudate. In some embodiments the capillaries are reduced to no more than 1 millimetre, 0.5 millimetre, 0.25 millimetre, 100 micrometres, 50 micrometres, 25 micrometres, or 10 micrometres.

Any of the processes may further comprise the step of enveloping the confectionery product in a coating. Such a coating will be apparent to the skilled addressee and discussed previously.

The extrudable confectionery material will at least partially or substantially solidify after extrusion.

If desired, two or more capillaries may be formed having different widths or diameters. Furthermore, two or more of the capillaries may be formed having different cross-sectional profiles.

The processes may be used for producing a confectionery material as herein above described.

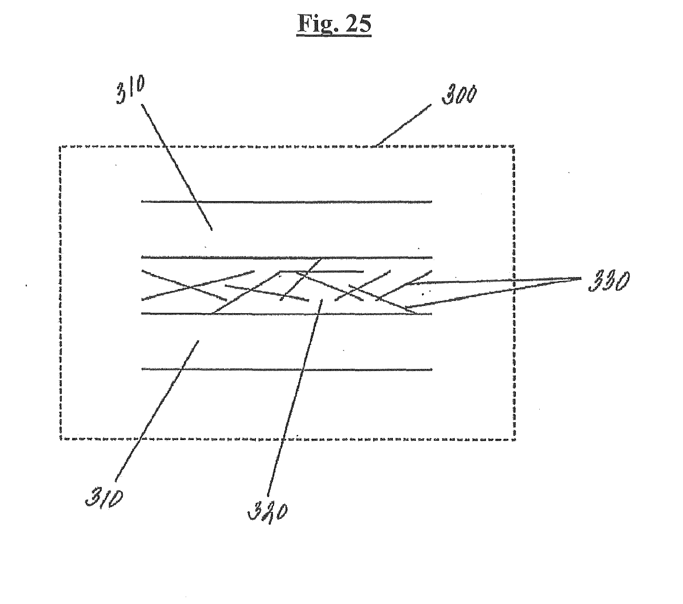

One embodiment is a confectionery product, comprising: an extruded body portion; and a plurality of capillaries disposed in the extruded body portion; wherein one or more of the capillaries is characterized by a capillary width or diameter and is partially filled with fibres comprising a bulk sweetener; and wherein the fibres are characterized by a fibre width or diameter that is about 1% to about 70% of the capillary width or diameter. Figure 25 is a longitudinal cross-sectional view of a portion of a confectionery product 300. The view bisects a single capillary 320 and shows portions of the extruded body portion 310 surrounding the capillary 320. Partially filling the capillary are multiple fibres 330.

As used herein the term "fibre" means a thread or filament having a length at least 10 times its width or diameter. The fibres can be formed by methods known for forming cotton candy. For example, a composition comprising melted bulk sweetener can be extruded through multiple fibre-sized orifices to form multiple fibres within each capillary. Applicable methods of forming cotton candy are described, for example, in U.S. Patent Nos. 3,036,532 ofBowe, 3,930,043 to Warning et al., 4,501,538 to Bray et al., 4,846,643 to Yamamoto et al., and 5,292,238 to Michalak. In some embodiments, the bulk sweetener is selected from the group consisting of monosaccharides, disaccharides, polysaccharides, sugar alcohols, polydextrose, maltodextrins, and mixtures thereof. In some embodiments, the bulk sweetener comprises xylitol. In addition to bulk sweeteners, the composition used to form the fibres can comprise flavours, colours, and other confectionery ingredients.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary. In some embodiments, the fibres have an average diameter of about 1 to about 300 micrometres. In some embodiments, the fibres have an average length of at least 1 centimetre.

The extruded body portion can be formed from any of the extrudable confectionery compositions described above, including hard and soft candy, gum, chocolate, etc.

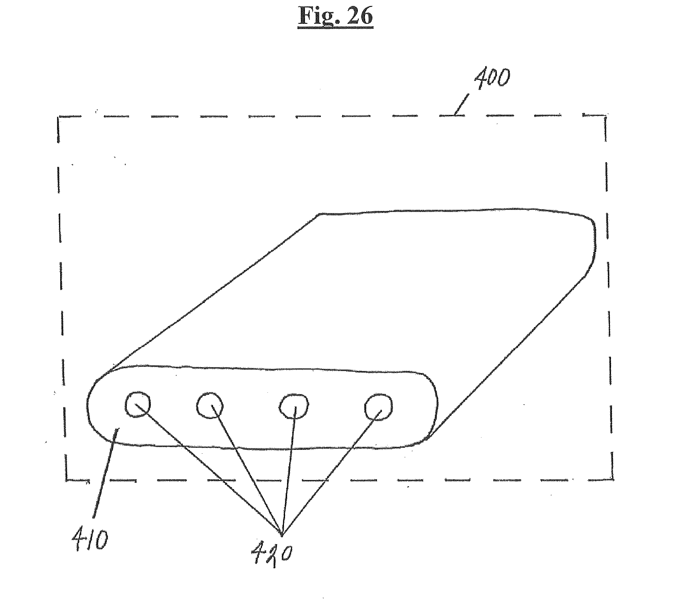

One embodiment is a confectionery product, comprising: an extruded body portion; and a plurality of capillaries disposed in the extruded body portion; wherein one or more of the capillaries is at least partially filled with a fill material that exhibits a colour change when the confectionery product is consumed. This confectionery product can take the general form shown in Figure 26, where the confectionery product 400 comprises an extruded body portion 410 and a plurality of capillaries 420 disposed in the extruded body portion 410. The capillaries 420 are at least partially filled with a fill material that exhibits a colour change when the confectionery product is consumed.

In some embodiments, the fill material comprises carminic acid (CAS Reg. No. 1260-17-9) or a food grade salt thereof. At neutral pH, carmine (cochineal) is red, and under acidic conditions, carminic acid, having an orange colour, is formed.

In some embodiments, the fill material comprises an anthocyanin or a food grade salt thereof. Suitable anthocyanins include those described in U.S. Patent No. 4,481,226 to Crosby et al. In some embodiments, the anthocyanin is an anthocyanin that naturally occurs in red cabbage. The colour of an anthocyanin can change from purple to red as the pH changes from neutral to acidic.

The colour-changing substance can be used in an amount of about 0.001 to about 1% by weight, specifically about 0.01 to about 0.1% by weight, based on the weight of the fill material.

In some embodiments, the fill material comprises a colour-changing substance in its basic form, and the extruded body portion comprises a food grade acid. When the confectionery product is consumed, the food grade acid donates one or more protons to the basic form of the colour-changing substance, thereby forming a differently-coloured acidic form of the colour-changing substance. Suitable food grade acids include, for example, acetic acid, ascorbic acid, adipic acid, citric acid, fumaric acid, lactic acid, malic acid, oxalic acid, phosphoric acid, succinic acid, tartaric acid, and the like, and mixtures thereof.

In some embodiments, the colour changing substance exhibits a colour change at about pH 5.5. Such a pH change is useful because pH values less than 5.5 are corrosive to teeth, whereas pH value greater than 5.5 lack such corrosivity.

In some embodiments, the colour change is accompanied by sensory shift or a flavour shift experienced by the consumer. The sensory shift can be a cooling sensation associated with dissolution of an edible material having a positive heat of solution, such as xylitol, erythritol, or citric acid. Alternatively, the sensory shift can be a cooling sensation associated with a physiological cooling agent, such as menthol and/or one or more of the physiological cooling agents and physiological cooling agent combinations described in U.S. Patent Nos. 4,032661 to Rowsell et al., 4,136163 to Watson et al., 4,150,052 to Watson et al., 4,153,679 to Rowsell et al., 4,178,459 to Watson et al., 4,193,936 to Watson et al., 4,226,988 to Watson et al., 4,230,688 to Rowsell et al., 7,030273 to Sun, and 7,364,761 to Wolf et al. Alternatively, the sensory shift can be a warming sensation associated with an edible material having a negative heat of solution (such as polydextrose) or a physiological warming agent (such as capsaicin).

In some embodiments, the confectionery product is a chewing gum, and the colour change is accompanied by sensory shift or a flavour shift experienced by the consumer. For example, the consumer can experience a sensory shift from a warming sensation to a cooling sensation. Methods of forming chewing gum with sensory shifts and/or flavour shifts are described, for example, in International Patent Application No. PCT/US2010/026337, filed March 5, 2010.

The extruded body portion can be formed from any of the extrudable confectionery compositions described above, including hard and soft candy, gum, chocolate, etc.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a confectionery product, comprising: an extruded body portion; and a plurality of capillaries disposed in the extruded body portion; wherein one or more of the capillaries is at least partially filled with a gasified confectionery composition. This confectionery product can take the general form shown in Figure 26, where the confectionery product 400 comprises an extruded body portion 410 and a plurality of capillaries 420 disposed in the extruded body portion 410. The capillaries 420 are at least partially filled with a gasified confectionery composition.

The extruded body portion can be formed from any of the extrudable confectionery compositions described above, including hard and soft candy, gum, chocolate, etc.

Gasified confectionery compositions are known in the art and described, for example, in U.S. Patent Nos. 3,012,893 to Kremzner et al., 3,985,909 and 3,985,910 to Kirkpatrick, to Kirkpatrick, 4,001,457 to Hegadorn, 4,289,794 to Kleiner et al., 4,935,189 to Mochizuki et al., 5,023,098 to Sumi et al., 5,439,698 to Ahn et al., 6,090,430 to Mochizuki et al., 6,235,318 B1 to Lombardy et al., 6,310,014 to Rau; European Patent No. EP 0 533 609 B1 to Bayes et al.; and International Patent Application Publication No. WO 2004/000283 A1 of First et al.

In some embodiments, the gasified confectionery composition is provided as a slurry or dispersion of the gasified confectionery composition in a food grade fat. During storage of the confectionery product, the food grade fat can protect the gasified confectionery composition from reaction with or dissolution in water.

In another embodiment, the leading end of an extruded portion could be crimped to seal the capillaries, and a pressurized gas (e.g., air, carbon dioxide, or nitrogen) could be pumped into the capillaries, which are subsequently crimped on the following end to provide a confectionery product in which the capillaries comprise a gas at a pressure greater than one atmosphere. In this embodiment, the pressurized gas can be pumped into the capillaries at a pressure greater than one atmosphere. Alternatively, the gas can pumped into the capillaries at a pressure less than or equal to one atmosphere, and the confectionery product, once sealed at both ends, can be warmed to create a gas pressure greater than one atmosphere within the capillaries.

In addition to gasified confectionery compositions, crystalline ingredients such as maltitol and isomalt can be used to create a crunching or popping noise when the confectionery product is consumed.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

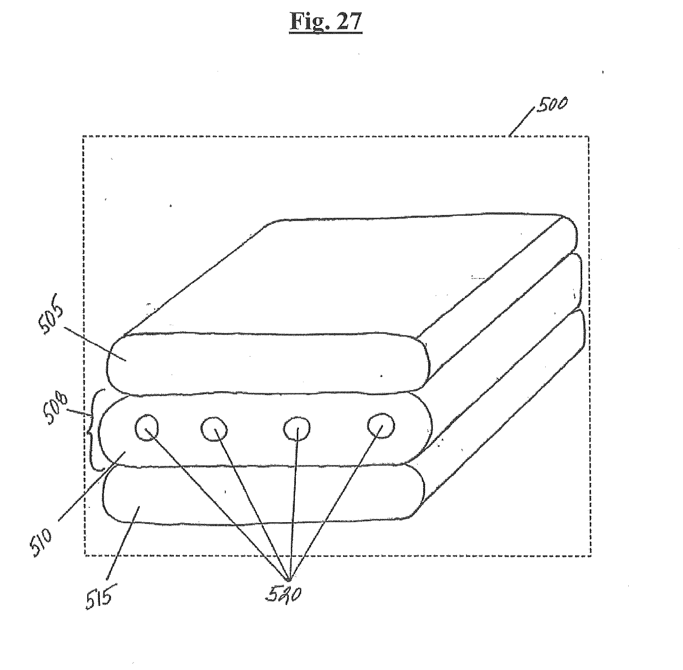

One embodiment is a confectionery product, comprising: a first confectionery layer; a second confectionery layer; and a third confectionery layer between and in contact with the first and second confectionery layers; wherein the third confectionery layer comprises an extruded body portion, and a plurality of capillaries disposed in the extruded body portion. This confectionery product can take the form shown in Figure 27. Figure 27 is a perspective view of a confectionery product 500 comprising a first confectionery layer 505, a second confectionery layer 515, and a third confectionery layer 508 between and in contact with the first confectionery layer 505 and the second confectionery layer 515. The third confectionery layer 508 comprises an extruded body portion 510 and a plurality of capillaries 520 disposed in the extruded body portion 510.

Each of the confectionery layers can be formed from any of the extrudable confectionery compositions described above, including hard and soft candy, gum, chocolate, etc. The capillaries disposed in the extruded body portion of the third confectionery layer can be filled with a liquid or solid confectionery composition. In one embodiment, the first and second confectionery layers comprise a chocolate composition, the extruded body portion of the third confectionery layer comprises a solid, mint-flavoured confectionery composition, and the capillaries comprise a liquid, mint-flavoured confectionery composition.

The confectionery product can further comprise a fourth confectionery layer at least partially surrounding the first, second and third confectionery layers. For example, the fourth confectionery layer can be a chocolate enrobing layer.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a fill material comprising at least 20 weight percent fat. The amount of fat in chewing gum is typically quite limited, because intimate blending of the chewing gum base and fat adversely causes an undesirable softening of the chewing gum base. The present invention's ability to physically segregate different components of a confection makes it possible to add substantial amounts of fat to the chewing gum while minimizing or eliminating the undesired softening of the chewing gum base. This is especially useful because many flavours are fat soluble.

The amount of fat in the fill material can be at least 30 weight percent, or at least 40 weight percent, or at least 50 weight percent, or at least 60 weight percent, or at least 70 weight percent, or at least 80 weight percent, or at least 90 weight percent. The remainder of the fill material can include sweeteners, flavours, colours, etc.

This chewing gum product can take the general form shown in Figure 26, where the confectionery product 400 is a chewing gum product and comprises an extruded body portion 410 and a plurality of capillaries 420 disposed in the extruded body portion 410. The capillaries 420 are at least partially filled with fat-containing fill material.

In some embodiments, the fat has a melting point of less than or equal to 40°C. In some embodiments, the fat comprises cocoa butter, milk fat, palm oil or a fraction thereof, lauric oil or a fraction thereof, or a mixture thereof. In some embodiments, the fat comprises cocoa butter.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a chewing gum product, comprising: an extruded body portion; and a plurality of capillaries disposed in the extruded body portion; wherein the extruded body portion comprises a first gum base composition; and wherein one or more of the capillaries comprises a second gum base composition different from the first gum base composition. This chewing gum product can take the general form shown in Figure 26, where the confectionery product 400 is a chewing gum product and comprises an extruded body portion 410 and a plurality of capillaries 420 disposed in the extruded body portion 410. The extruded body portion 410 comprises a first gum base composition, and the capillaries 420 comprise a second gum base composition different from the first gum base composition. In addition to their respective gum bases, the extruded body portion and the capillaries can comprise water soluble gum ingredients, such as bulk sweeteners, high-intensity sweeteners, flavours, and the like.

In some embodiments, the first gum base composition has a first texture, and the second gum base composition has a second texture different from the first texture. The differences in texture can be objectively manifested as, for example, a difference in tensile modulus measured at 25°C according to ASTM D638-08, or a difference in flexural modulus measured at 25°C according to ASTM D790-07e1. Subjectively, the first gum base can be soft and the second gum base can be hard. Alternatively, the first gum base can be hard, and the second gum base can be soft. In additions to variation in hardness, the two gum bases can differ in texture by incorporating different amounts of fillers.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a confectionery product, comprising: an extruded body portion; and a plurality of capillaries disposed in the extruded body portion; wherein the extruded body portion comprises a confectionery composition having a first flexural modulus measured at 25°C according to ASTM D790; and wherein one or more of the capillaries is at least partially filled with a fill material having a second flexural modulus measured at 25°C according to ASTM D790; wherein the second flexural modulus is at least 10% greater than the first flexural modulus. In some embodiments, the second flexural modulus is at least 50% greater than the first flexural modulus, or at least 100% greater than the first flexural modulus. This confectionery product can take the general form shown in Figure 26, where the confectionery product 400 comprises an extruded body portion 410 and a plurality of capillaries 420 disposed in the extruded body portion 410. The extruded body portion 410 has a first flexural modulus, and the capillaries 420 are at least partially filled with a fill material having a second flexural modulus at least 10% greater than the first flexural modulus.

The difference in flexural modulus is perceived as a difference in hardness. The difference in hardness can be so great that the confectionery composition of the extruded body portion and the fill material of the capillaries physically separate in the mouth when the confectionery product is chewed.

In some embodiments, the confectionery composition is a chewing gum composition and the fill material is a hard candy composition. In some embodiments, the confectionery composition is a chewy candy composition and the fill material is a hard candy composition.

In some embodiments, the fill material comprises a hard boiled candy composition. Hard boiled candy compositions typically have a residual water content of about 0.3 weight percent to about 4 weight percent, based on the weight of the hard boiled candy composition.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

Preparation of very specific embodiments of the confectionery product is described in Example 3, below.

One embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a gummy confectionery composition. This chewing gum product can take the general form shown in Figure 26, where the confectionery product 400 is a chewing gum product and comprises an extruded body portion 410 and a plurality of capillaries 420 disposed in the extruded body portion 410. The capillaries 420 are at least partially filled with a gummy confectionery composition.

Gummy confectionery compositions are known in the art and described, for example, in U.S. Patent Application Publication Nos. US 2005/0191406 A1 of Alexander et al. and US 2006/0286284 A1 of Mistry et al. The basis of gummy confectionery compositions is a sugar/glucose syrup combination and a gelatinizing agent. The gelatinizing agent can be gelatine, agar, gum arabic, maltodextrin, pectin, a modified starch, or the like. The gelatinizing material is desirably dissolved in water prior to mixing with the sugar/glucose syrup combination. If pectin is used as the gelatinizing agent, then the pectin is desirably dry mixed with the sugar prior to addition of the dry mixture to water. Gummy confectionery compositions can include a variety of components, including corn syrup, fruit juice concentrates, sugar, gelatine, starch, pectin, sorbitol, food acids, colours, flavourings, high fructose corn syrup, sodium citrate, warming and cooling agents, and combinations thereof.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

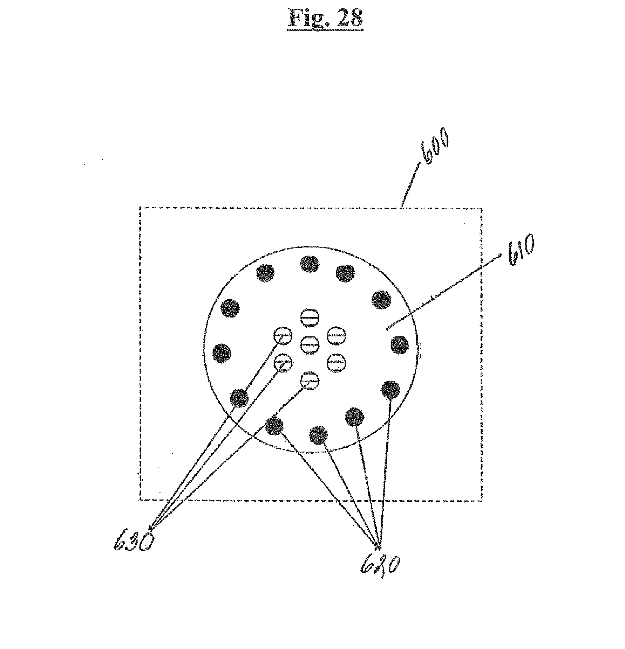

One embodiment is a chewing gum product, comprising: an extruded body portion; and a plurality of capillaries disposed in the extruded body portion; wherein the extruded body portion comprises a chewing gum composition and an exposed surface; wherein the plurality of capillaries comprises a first group of capillaries distributed around the periphery of the extruded body portion and a second group of capillaries distributed interior to said first group; wherein the first group of capillaries comprises a first confectionery composition comprising a first flavour; and wherein the second group of capillaries comprises a second confectionery composition comprising a second flavour different from the first flavour. This chewing gum product can take the form shown in Figure 28. Figure 28 is a cross-sectional view of a confectionery product 600 that is a chewing gum product comprising an extruded body portion 610, first capillaries 620 distributed around the periphery of the extruded body portion, and second capillaries 630 interior to the first capillaries 620.

The chewing gum product is useful for creating or enhancing time-controlled release of flavours from the chewing gum. For example, the first group of capillaries can comprise a fruit flavour for initial release, and the second group of capillaries can comprise a mint flavour for delayed release. Encapsulation techniques can be used for additional time-control of flavour release.

In some embodiments, the plurality of capillaries has a volume of about 5 to about 40% of the total volume of the extruded body portion and the plurality of capillaries. In some embodiments, the first group of capillaries and/or the second group of capillaries has a capillary width or diameter of about 0.1 to about 5 millimetres. In some embodiments, the first group of capillaries and/or the second group of capillaries has a distance of about 0.1 to about 3 millimetres separating a capillary from an adjacent capillary of the same group.

One embodiment is a chewing gum product, comprising: an extruded body portion; and a plurality of capillaries disposed in the extruded body portion; wherein the extruded body portion comprises a chewing gum composition; and wherein one or more of the capillaries is at least partially filled with a fill material capable of expanding when chewed. This chewing gum product can take the general form shown in Figure 26, where the confectionery product 400 is a chewing gum product and comprises an extruded body portion 410 and a plurality of capillaries 420 disposed in the extruded body portion 410. The capillaries 420 are at least partially filled with a fill material capable of expanding when chewed.

In some embodiments, the fill material comprises sodium bicarbonate, potassium bicarbonate, ammonium bicarbonate, sodium carbonate, potassium carbonate, or a mixture thereof; and the extruded body portion comprises citric acid, tartaric acid, fumaric acid, adipic acid, malic acid, or a mixture thereof. When the confectionery product is consumed, the carbonate or bicarbonate salt reacts with the acid to form carbon dioxide, causing an expansion of the fill material.

In some embodiments, the fill material comprises a gasified confectionery material. Gasified confectionery compositions are known in the art and described, for example, in U.S. Patent Nos. 3,012,893 to Kremzner et al., 3,985,909 and 3,985,910 to Kirkpatrick, to Kirkpatrick, 4,001,457 to Hegadorn, 4,289,794 to Kleiner et al., 4,935,189 to Mochizuki et al., 5,023,098 to Sumi et al., 5,439,698 to Ahn et al., 6,090,430 to Mochizuki et al., 6,235,318 B1 to Lombardy et al., 6,310,014 to Rau; European Patent No. EP 0 533 609 B 1 to Bayes et al.; and International Patent Application Publication No. WO 2004/000283 A1 of First et al.

In some embodiments, the fill material comprises carbamide peroxide. The carbamide peroxide can decompose to form oxygen gas on consumption of the confectionery product. Carbamide peroxide also provides teeth-whitening benefits.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a chocolate confectionery product, comprising: an extruded body portion; and a plurality of capillaries disposed in the extruded body portion; wherein the extruded body portion comprises a body portion confectionery composition comprising cocoa solids and characterized by a body portion melting temperature; wherein the plurality of capillaries comprises a first group of at least two capillaries at least partially filled with a first capillaries confectionery composition and characterized by a first capillaries melting temperature different from the body portion melting temperature; and wherein the plurality of capillaries comprises a second group of at least two capillaries, different from the first group of at least two capillaries, at least partially filled with a second capillaries confectionery composition and characterized by a second capillaries melting temperature different from the body portion melting temperature and the first capillaries melting temperature.

This chocolate confectionery product can take the general form shown in Figure 28. Figure 28 is a cross-sectional view of a confectionery product 600 that is in this case a chocolate confectionery product comprising cocoa solids. The confectionery product 600 comprises an extruded body portion 610, first capillaries 620 distributed around the periphery of the extruded body portion, and second capillaries 630 interior to the first capillaries 620.

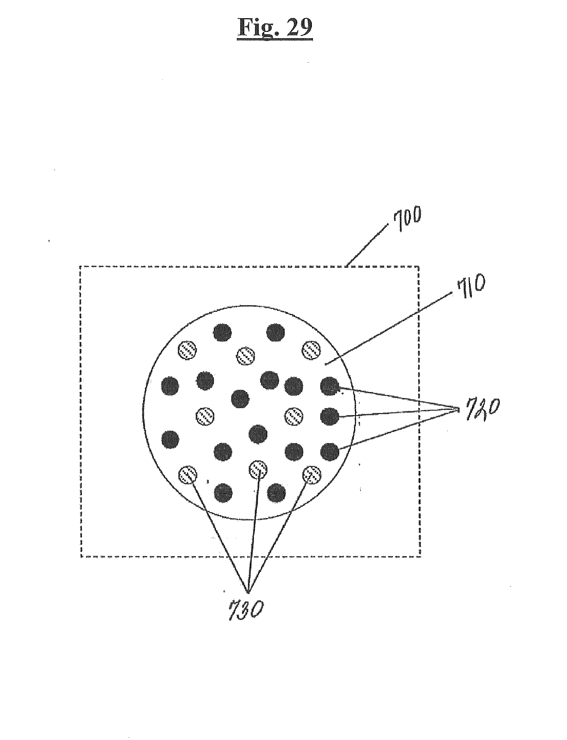

Alternatively, the chocolate confectionery product can take the general form shown in Figure 29. Figure 29 is a cross-sectional view of a confectionery product 700 that is in this case a chocolate confectionery product comprising cocoa solids. The confectionery product 700 comprises an extruded body portion 710, first capillaries 720 distributed randomly in the extruded body portion 710, and second capillaries 730 distributed randomly in the extruded body portion 710.

The chocolate confectionery product can be used to create a texture or mouth-feel that changes over time. For example, the body portion confectionery composition can be of intermediate melting temperature and hardness, the first capillaries confectionery composition can be of low melting temperature and hardness, and the second capillaries confectionery composition can be of high melting temperature and hardness.

In some embodiments, the first capillaries confectionery composition is a liquid at ambient temperature and pressure, and the second capillaries confectionery composition is a hard boiled candy composition.

In some embodiments, the plurality of capillaries has a volume of about 5 to about 40% of the total volume of the extruded body portion and the plurality of capillaries. In some embodiments, the first group of capillaries and/or the second group of capillaries has a capillary width or diameter of about 0.1 to about 5 millimetres. In some embodiments, the first group of capillaries and/or the second group of capillaries has a distance of about 0.1 to about 3 millimetres separating a capillary from an adjacent capillary of the same group.

One embodiment is a method of forming a chocolate confectionery product, comprising: extruding a confectionery material to form an extruded body portion, and a plurality of capillaries disposed in the extruded body portion; cutting the extrudate to form a rope; and processing the rope in a ball former to form individual pieces of chocolate confectionery product. Use of a ball former, which is a known confectionery apparatus, is a convenient means of sealing the cut surfaces of the chocolate confectionery product. The extruded body portion is typically formed from a chocolate composition. The capillaries can be unfilled or filled with a confectionery composition that can be liquid or solid at room temperature. For example, the extruded body portion can be formed from a dark chocolate composition, and the capillaries can be filled with a coffee-flavoured liquid confectionery composition.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a chocolate confectionery product, comprising: an extruded body portion; and a plurality of capillaries disposed in the extruded body portion; wherein the extruded body portion comprises a body portion confectionery composition comprising cocoa solids; wherein one or more of the capillaries is at least partially filled with a fill material comprising hazelnut flavour. This chocolate confectionery product can take the general form shown in Figure 26, where the confectionery product 400 is a chocolate confectionery product and comprises an extruded body portion 410 and a plurality of capillaries 420 disposed in the extruded body portion 410. The capillaries 420 are at least partially filled with a fill material comprising hazelnut flavour.

The fill material can be a liquid or a soft solid or a hard solid. In one embodiment, the body portion confectionery composition is a milk chocolate composition, and the fill material is a (liquid) hazelnut liqueur.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

In some embodiments, the chocolate confectionery product further comprises a crepe or waffle layer disposed on at least one surface of the extruded body portion. The crepe or waffle layer can be provided as a continuous layer, or as embedded pieces of crepe or waffle partially or completely covering the at least one surface of the extruded body portion.

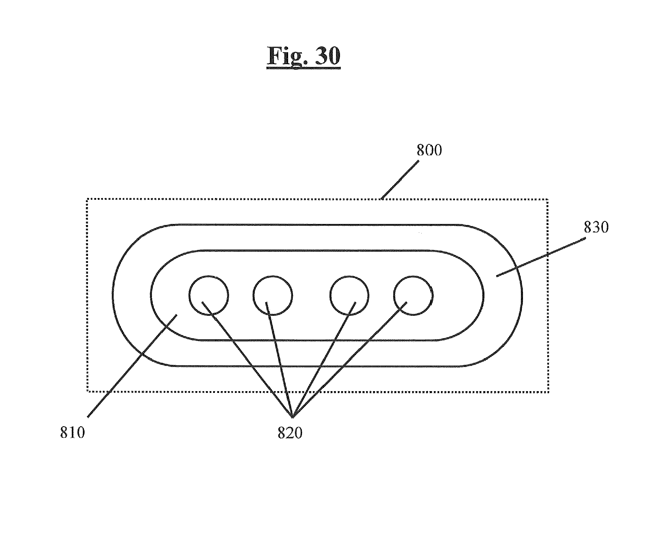

One embodiment is a chocolate confectionery product, comprising: an extruded body portion; and a plurality of capillaries disposed in the extruded body portion; wherein the extruded body portion comprises a confectionery composition comprising a coconut flavour; and a chocolate layer at least partially surrounding the extruded body portion; wherein the chocolate layer comprises a chocolate composition comprising cocoa solids; and wherein one or more of the capillaries is at least partially filled with a fill material comprising cherry flavour. This chocolate confectionery product can take the general form shown in Figure 30, where the confectionery product 800 is a chocolate confectionery product and comprises an extruded body portion 810 and a plurality of capillaries 820 disposed in the extruded body portion 810. The capillaries 820 are at least partially filled with a fill material comprising cherry flavour. A chocolate layer 830 at least partially surrounds the extruded body portion.

Coextrusion can be used to simultaneously form the chocolate layer, the extruded body portion, and the capillaries. Alternatively, the extruded body portion and the capillaries can be simultaneously formed via coextrusion, and the chocolate layer can be subsequently formed via an enrobing step.

The fill material comprising cherry flavour can be a liquid, a soft solid, or a hard solid. In one embodiment, the confectionery material of the extruded body portion is a chewy coconut confectionery composition, the fill material is a chewy cherry confectionery composition, and the chocolate layer is a dark chocolate layer.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

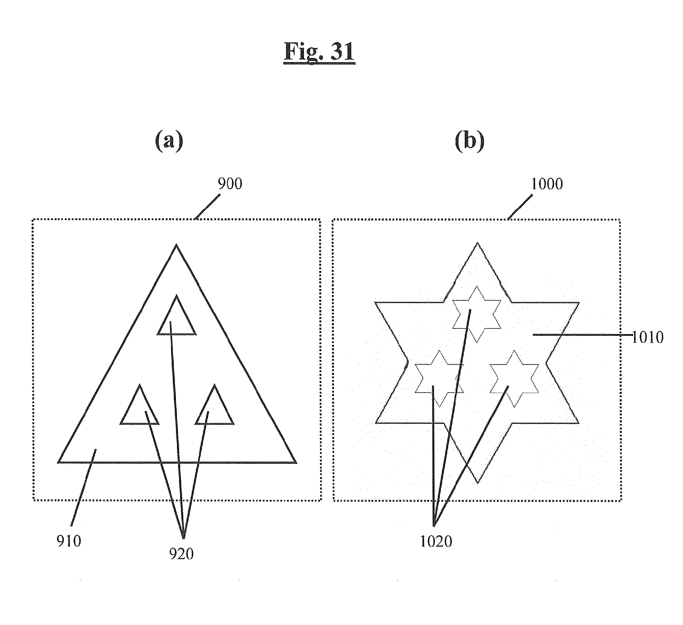

One embodiment is a chocolate confectionery product, comprising: an extruded body portion; and a plurality of capillaries disposed in the extruded body portion; wherein the extruded body portion comprises a confectionery composition comprising cocoa solids; wherein the extruded body portion is characterized by a non-circular cross-sectional shape; and wherein one or more of the capillaries is characterized by a non-circular cross-sectional shape approximating the cross-sectional shape of the extruded body portion. This chocolate confectionery product can take the form of Figure 31. In Figure 31, the chocolate confectionery product 1000 comprises an extruded body portion 1010 characterized by a non-circular cross-sectional shape, and a plurality of capillaries 1020 disposed in the extruded body portion 1010 and characterized by a non-circular cross-sectional shape approximating the cross-sectional shape of the extruded body portion 1010. In Figure 31(a), the non-circular shape is a triangle. In Figure 31(b), the non-circular shape is a six-pointed star.

In some embodiments, the non-circular cross-sectional shape of the extruded body portion and the non-circular cross-sectional shape of the one or more of the capillaries are non-square. In some embodiments, the non-circular cross-sectional shape of the extruded body portion and the non-circular cross-sectional shape of the one or more of the capillaries are polygons having at least five sides.

The extruded body portion comprises a confectionery composition comprising cocoa solids. The confectionery composition can be, for example, a dark chocolate composition or a milk chocolate composition. The capillaries can be air-filled. Alternatively, the capillaries can be filled with a fill material comprising a confectionery composition. In one embodiment, the extruded body confectionery composition is a milk chocolate composition, and the capillaries are filled with a soft, peanut butter-flavoured confectionery composition.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a packaged chocolate confectionery product, comprising: an extruded body portion; a plurality of capillaries disposed in the extruded body portion; and a dispensing package containing the extruded body portion and the plurality of capillaries; wherein the extruded body portion comprises a first confectionery composition comprising cocoa solids; wherein the first confectionery composition has a viscosity of about 100,000 to about 1,000,000 centipoise at 25°C; wherein one or more of the capillaries is at least partially filled with a second confectionery composition different from the first confectionery composition; and wherein the second confectionery composition has a viscosity of about 5,000 to about 1,000,000 centipoise at 25°C. The contents of the packaged chocolate confectionery product (i.e., the packaged chocolate confectionery product less the packaging) can take the general form shown in Figure 26, where the confectionery product 400 is a chocolate confectionery product and comprises an extruded body portion 410 and a plurality of capillaries 420 disposed in the extruded body portion 410. The capillaries 420 are at least partially filled with a second confectionery composition.

The first confectionery composition of the extruded body portion comprises cocoa solids. For example, the first confectionery composition can be a dark chocolate composition or a milk chocolate composition. The first confectionery composition has a viscosity of about 100,000 to about 1,000,000 centipoise at 25°C. This viscosity corresponds to a paste-like consistency.

The second confectionery composition of the capillaries has a viscosity of about 5,000 to about 1,000,000 centipoise at 25°C. This corresponds to a range of consistencies from liquid to paste-like. In some embodiments, the second confectionery composition comprises a flavour selected from the group consisting of chocolate flavour, cherry flavour, hazelnut flavour, mint flavour, coffee flavour, toffee flavour, caramel flavour, cinnamon flavour, vanilla flavour, orange flavour, chilli flavour, and combinations thereof.

In some embodiments, the dispensing package comprises a flexible tube, such as the type of flexible tube sometimes used for toothpaste. In some embodiments, the dispensing package comprises a pump.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

One embodiment is a chewing gum product, comprising: an extruded body portion; and a plurality of capillaries disposed in the extruded body portion; wherein the extruded body portion comprises a gum base composition comprising an elastomer; and wherein one or more of the capillaries is at least partially filled with an elastomer-free fill material. This chewing gum product can take the general form shown in Figure 26, where the confectionery product 400 is a chewing gum product and comprises an extruded body portion 410 comprising an elastomer and a plurality of capillaries 420 disposed in the extruded body portion 410. The capillaries 420 are at least partially filled with an elastomer-free fill material.

In some embodiments, the gum base composition further comprises at least one component selected from the group consisting of elastomer plasticizers, resins, fats, oils, waxes, softeners, fillers, and combinations thereof.

In some embodiments, the elastomer-free fill material comprises at least one component selected from the group consisting of softeners, bulk sweeteners, high intensity sweeteners, flavouring agents, syrups, sensates, acids, potentiators, colorants, and functional ingredients.

In some embodiments, the gum base composition has a 25°C water solubility less than or equal to 1 gram per litre; and wherein the elastomer-free fill material has a 25°C water solubility of at least 10 grams per litre.

In some embodiments, the plurality of capillaries has a volume of about 5 to about 40% of the total volume of the extruded body portion and the plurality of capillaries. In some embodiments, the capillaries have a width or diameter of about 0.1 to about 5 millimetres. In some embodiments, a distance of about 0.1 to about 3 millimetres separates a capillary from an adjacent capillary.

A further embodiment of the present invention provides for apparatus which is adapted for producing a confectionery product according to the processes as herein above described. WO2005056272 discloses an apparatus for producing an extruded product including a plurality of capillary channels. WO2008044122 discloses a related apparatus, which additionally includes means for quench cooling an extrudate as it exits the die. Both of these apparatus may be employed/adapted for use in producing the confectionery in accordance with the present invention.

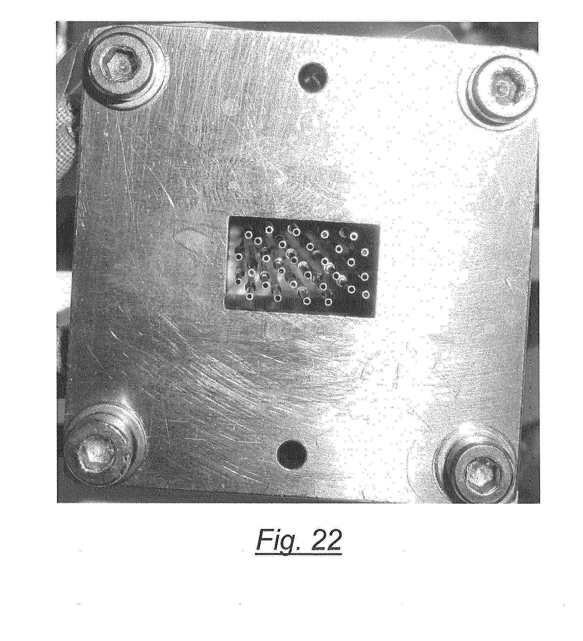

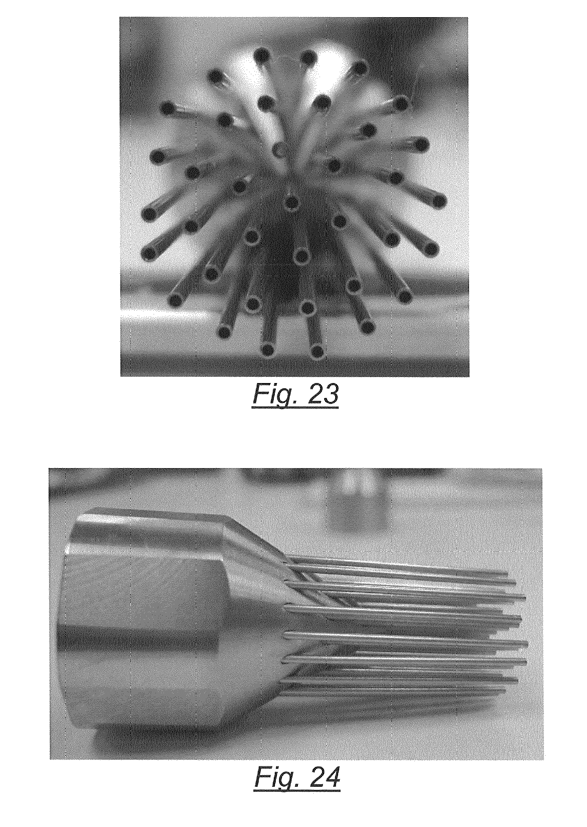

The extrusion die employed in the apparatus can be a ribbon die, matrix die, annular die or circular die. Different dies can be used to produce different extruded product shapes and different amounts and patterns of the capillaries. In particular, different dies can have different numbers of needles, thereby providing extruded products with different amounts of capillaries disposed therein. The needles also may have different cross-sectional profiles, thereby providing extruded products with various shapes and patterns of the capillaries. For instance, in some embodiments, a die may have anywhere from 2-50 needles. In some embodiments, the die may have a smaller number of needles, such as for instance 3-5 needles. In some other embodiments, the die may have a larger number of needles, such as for instance 20-40 needles, or 30-40 needles in some embodiments. For example, the matrix die shown in Figure 22 contains 30 needles having an inner diameter of 0.5 millimetre. The circular die shown in Figures 23 and 24 contains 37 needles having an inner diameter of 1.1 millimetres.

In addition, the apparatus can include a flange surrounding the die and defining the orifice of the extrusion apparatus. Different flanges can be employed to form different outer shapes of the extrudate. The flange also can define the distance between the plurality of capillaries and the outer surface of the extrudate. For instance, the plurality of capillaries may be centrally grouped within the extruded body portion and surrounded by an outer wall that extends to the outer surface of the body portion. The thickness of the outer wall can be determined by the size of the flange.

Specific embodiments of the present invention will now be described, by way of example only, with reference to the accompanying drawings.
Figure 1 is a schematic diagram illustrating the overall apparatus used for the experiments described in Examples 1 and 2, in accordance with the present invention.
Figure 2 is a schematic diagram illustrating the apparatus which can be used in conjunction with the apparatus shown in Figure 1, so as to provide liquid-filled capillaries.
Figure 3 is a photograph of the extrusion die used to form capillaries in the extruded material of Examples 1 and 2.
Figure 4 is a plan view of the extrusion die which incorporates the extrusion die shown in Figure 3 in the apparatus as illustrated in Figures 1 and 2.
Figure 5 shows photographs of four capillary extrudates formed from material 1 in Example 1, the photographs show: (A) low voidage, (B) and (C) high voidage and (D) very high voidage.
Figure 6 shows photographs comparing capillary extrudates formed from (A) material 2 containing completely filled cocoa butter capillaries and (B) material 1 formed with air filled capillaries.
Figure 7 shows a photograph of the external part of the extrusion apparatus as illustrated in Figures 1 and 2, showing the air knives used to cool the extrudate when it exist the die.
Figure 8 shows a hard candy with an air fill produced in Example 2, in accordance with the present invention.
Figure 9 shows a hard candy with a liquid fill produced in Example 2, in accordance with the present invention.
Figure 10 shows a gum with an air fill, produced in Example 2, in accordance with the present invention.
Figure 11 shows a gum with a liquid fill, produced in Example 2, in accordance with the present invention.
Figure 12 shows a gum with a solid fill, produced in Example 2, in accordance with the present invention.
Figure 13 shows a chocolate with an air fill, produced in Example 2, in accordance with the present invention.
Figure 14 shows a chocolate with an air fill as shown in Figure 13, but in longitudinal cross section.
Figure 15A shows a perspective view of an extrudate formed in accordance with the present invention, where the extrudate has been folded.
Figure 15B shows a cross-sectional view of the extrudate as shown in Figure 15A, viewed from the line denoted "X".
Figure 16 shows a perspective view of an extrudate formed in accordance with the present invention, where a number of extruded layers have been stacked upon one another.
Figure 17 shows a schematic cross-section of a confectionery product in accordance with the present invention, where the capillaries are of a uniform cross-sectional shape and arranged in a uniform manner.
Figure 18 shows a schematic cross-section of a confectionery product in accordance with the present invention, where the capillaries are formed having different cross-sectional shapes.
Figure 19 shows a similar schematic cross-section of a confectionery product similar to that shown in Figure 18, however the confectionery product is formed of three different portions.
Figure 20 shows a schematic cross-section of a confectionery product in accordance with the present invention, where the capillaries are arranged in a uniform manner in particular areas of the confectionery product.
Figure 21 shows a schematic cross-section of a confectionery product in accordance with the present invention, where each capillary is separated from each adjacent capillary by a wall formed from the extruded body portion and the wall between each capillary has a thickness of no more than the width or diameter of the capillaries.

Experiments were conducted to produce a variety of confectionery products incorporating capillaries. Four phases of extrusion work were undertaken using various materials. The first phase concerned the extrusion of hard candy using a capillary die attached to a small-scale extruder in a non-food grade environment for creating capillary candy extrudates in both low- and high-voidage forms.

The second phase of the experimental work built upon the first phase to produce low and high voidage candy capillary extrudates containing an array of cocoa butter-filled capillaries. The first and second phases are described below in Example 1. The third phase built upon the first two and recreated the working environment with food grade equipment in a food grade environment and is described below in Example 2. The fourth phase of extrusion work demonstrates the preparation of confections with an extruded body portion comprising chewy candy and capillaries comprising hard candy.

### Example 1

Phase one concerned the extrusion of candy using a capillary die attached to a small-scale extruder, in order to confirm that candy having capillaries with both low and high voidage values could be formed in accordance with the present invention.

The materials that were trialled during this investigation are shown in Table 1.

**Table 1. Materials tested.**

| **Material number** | **Material name** | **Majority ingredients** | **Application** |
|---|---|---|---|
| 1 | Custom recipe 1 | Sugar (40%) Glucose Syrup (60%) | Extruded matrix |
| 2 | Custom recipe 2 | Maltitol syrup (96%) Gum Arabic (2%) Water (2%) | Extruded matrix |
| 3 | Cocoa butter | Cocoa butter (100%) | Capillary filler |

Materials 1 and 2 were supplied as large solid blocks. All materials were crushed prior to extrusion to yield a fine granular powder, with grain sizes ranging between 1 mm and 5 mm. Material 3 was supplied as a tub of solidified cocoa butter; the required quantity was broken up into a fine powder containing only small lumps before being fed into the heated cocoa butter reservoir.

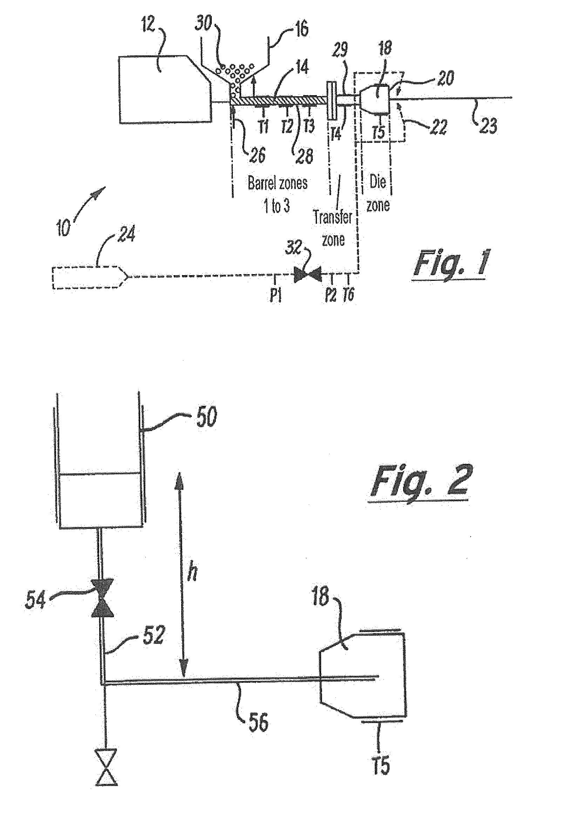

The extrusion equipment consisted of a Betol single screw extruder, with a screw diameter of approximately 12 mm, and a screw L/D ratio of roughly 22.5:1. The extruder had four different temperature zones (denoted T1-T4 in figure 1 as described later), each of which could be independently controlled using PID controllers connected to band heaters. The Mk 3 MCF extrusion die, containing an entrainment array consisting of 17 hypodermic needles, was connected on the extruder endplate. Two opposed air jets, used to rapidly quench the extrudate emerging from the extrusion die, were placed above and below the die exit; these jets were connected via a valve to a compressed air line at 6 Barg. A schematic diagram showing the general layout of the extrusion line is shown in Figure 1 and a schematic drawing of the capillary die is shown in Figure 2.

With reference to Figure 1, there is shown a schematic diagram of the extrusion apparatus 10 used in the experiments. The apparatus briefly comprises an electric motor 12 which is rotatably coupled to an extrusion screw 14. The screw 14 is fed at one end by a hopper 16 and the opposing end is coupled to an extrusion die 18 having an extrudate outlet 20. Quench jets 22 are directed towards the die outlet 20 so as to cool the extruded material 23 which is produced and these jets are fed with compressed air 24. If desired, the area of the apparatus where the hopper 16 is coupled to the screw 14 can be cooled by means of a cooling feed 26. Surrounding the screw 14 is a barrel 28 which is formed having three barrel temperature zones denoted T1 to T3 - the temperatures of each zone being capable of being controlled. The barrel 28 is connected to the die 18 by means of a feed conduit 29 which also has a temperature zone T4 which can be controlled.

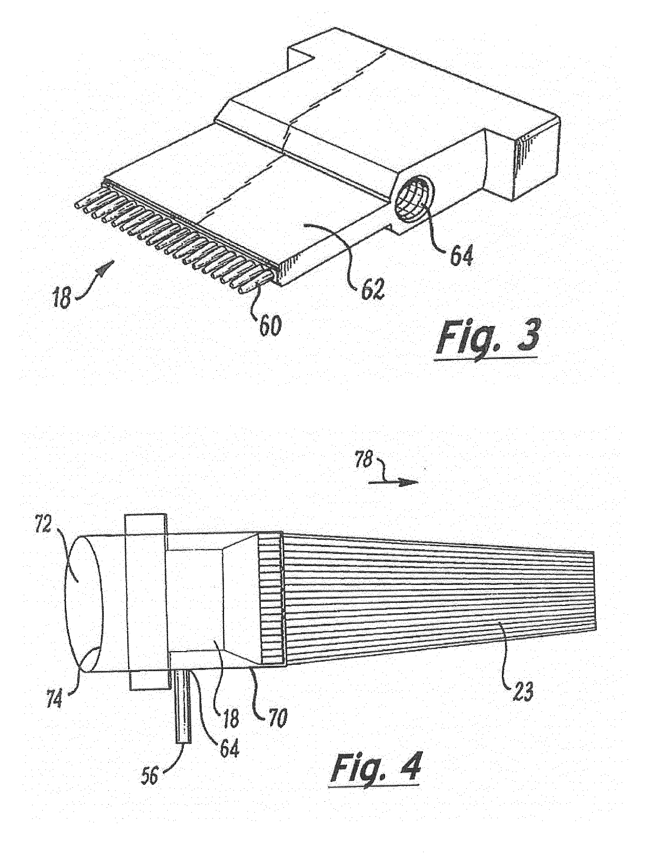

In use, the hopper 16 is filled with material 30 (such as candy in solution) which can be heated so as to render it (or maintain it as) a liquid (not solid or solid particulate form). Before the material passes into the screw 14, it can be cooled by means of the cool feed 26, so as to ensure that the material is at the correct temperature for entering the screw extruder. As the screw is rotated, the liquid material is drawn along the screw 14, inside the barrel 28 and the temperature of the zones T1-T3 adjusted accordingly. The material then passes through the feed conduit 29 and the temperature adjusted again (if required) by temperature control T4 before entering the die 18. The die 18 (shown in Figure 3) has a number of needles (not shown) located within an entrainment body so that the material passes over and around the needles. At the same time that the material is being extruded, compressed air 24 is forced through the needles so that the extrudate contains a number of capillaries. The extrudate 23 is cooled by means of the quench jets 22 as it is released from the die 18. A valve 32 controls the flow of compressed air to the apparatus and pressure devices P1 and P2 control the pressure of the compressed air 24 before and after the valve. The compressed air line also has a temperature control T6 so as to control the temperature of the air before entering the die.

With reference to Figure 2, there is shown an adaptation of the apparatus shown in Figure 1. Rather than compressed air 24 being forced through needles, the needles are connected to a reservoir 50 containing cocoa butter. The reservoir 50 is heated so that the cocoa butter is maintained at the correct temperature so as to maintain it in a liquid state. The reservoir 50 is connected to a conduit 52 having an isolation valve 54 for controlling the flow of liquid. The conduit 52 is encased in a trace heating tube 56 which maintains the temperature of the conduit so that the liquid remains in a liquid state during its movement within the conduit. The conduit 52 is coupled to the inlet to the die 18 having number of needles, so that when the material is being extruded, the capillaries formed around and the needles can be simultaneously filled with cocoa butter. Of course, the capillaries could be filled with other types of liquid material if desired.

Figure 3 shows the die 18 in more detail. In particular, this figure shows that the metallic die 18 has, at one end, a plurality of needles 60 which are joined to a cavity 62 which is in fluid communication with an inlet channel 64 for pumping a fluid material into the capillaries of the extrusion.

With reference to Figure 4, there is shown the die 18 in place in an entrainment body 70. Molten material 72 enters an opening 74 of the entrainment body 70 and the material is forced over and around the needles 60 of the die 18. At the same time, either air or liquid cocoa butter enters the die inlet by means of a fluid feed conduit 56. When operational, the molten material is extruded through the entrainment body 70 over the needles 60 of the die 18. Either air or cocoa butter is then pumped through the needles at the same time so as to produce an extrudate 23 (in direction 78) which either has capillaries with no filling or capillaries filled with cocoa butter.

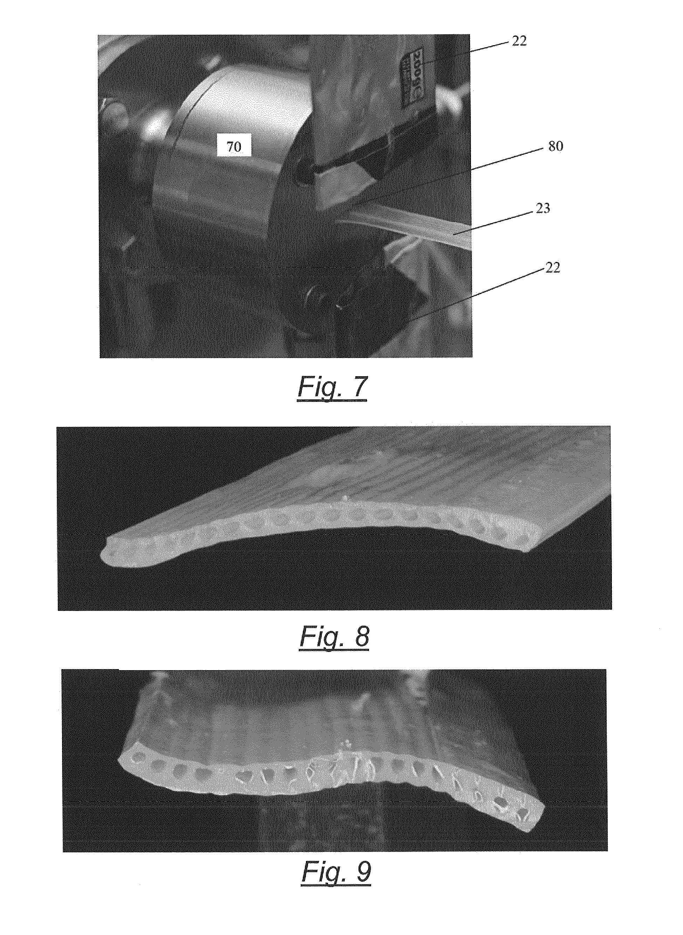

Figure 7 shows the entrainment body 70 having an opening 80, through which the extrudate is formed. This figure also shows two quench jets 22 located above and below the aperture so as to cool down the extrudate after is has been produced.

In use, the flow of molten material over the tips of the entrainment nozzles (hypodermic needles) caused a small area of low pressure to form at each needle tip. Each nozzle was connected together via internal channelling within the entrainment body. These, in turn, were connected outside the extrusion die to either air at room temperature and pressure or to a molten cocoa butter reservoir, with a hydraulic head of h in Figure 2. The pipework connecting the die to the cocoa butter reservoir and the cocoa butter reservoir was externally heated to maintain the cocoa butter in the liquid phase. A set of isolation valves were used to switch between either using an air feed to the entrainment body or a molten cocoa butter feed. This is shown schematically in Figure 2.

The quench jets were used for the generation of the high-voidage material.

Differential scanning calorimetry (DSC) was used to examine the thermal behaviour of the materials, such that information relating to the phase transition temperatures could be obtained.

Material 1 was formed in a large solid block. The block was broken up mechanically, such that it became a granulated material with granule sizes between 1 mm and 5 mm.

The extrusion temperature profile was set to that shown in below Table 2.

**Table 2. Extruder temperature profile for material 1.**

| **Temperature zone** | **Label on** **Figure 1** |
|---|---|
| Barrel zone 1 | T1 |
| Barrel zone 2 | T2 |
| Barrel zone 3 | T3 |
| Die zone 1 | T4 |
| Die | T5 |

Granulated pieces of material 1 were starve-fed into the extruder, with the extruder screw-speed set to 40 rpm. The granules of material 2 conveyed well into the extruder in the solid phase initially, but due to the sticky nature of the material, some mild feed zone bridging and blocking was observed. This was overcome by gently pushing the broken-up material onto the extruder screw with a polyethylene rod.

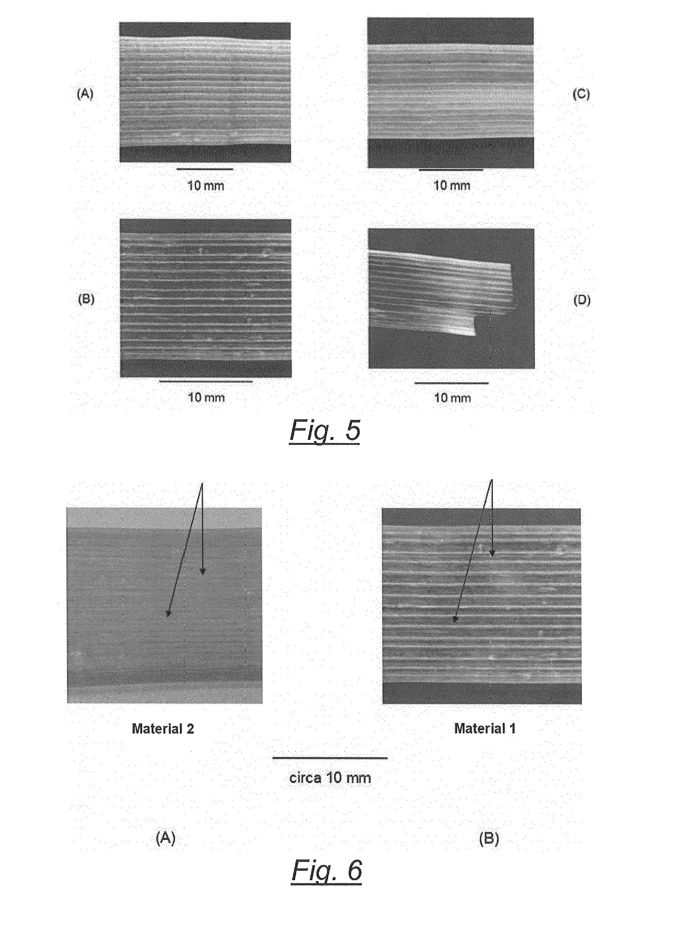

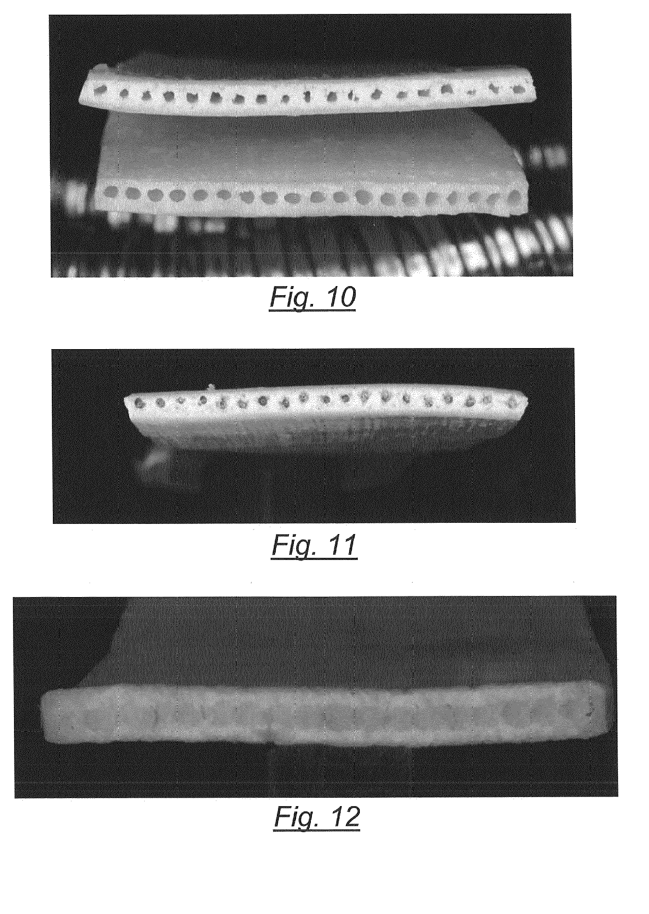

Successful capillary extrudates were easily achievable using this protocol. The material had good melt strength and was pulled away easily from the die in the molten state before it set into a brittle, glassy, material. The glassy state of the material meant that it was unsuitable for use in a pair of nip rolls since the compression experienced by the material in this apparatus caused fracture. Consequently, the capillary extrudates from material 1 were hand drawn, the capillaries having an average diameter (width) of less than 4mm. Low voidage MCF from material 1 was easily obtained without quenching the extrudate using the quench jets; this is illustrated in the photograph in Figure 5(A). Enhanced manual hauling of the extrudate away from the die exit coupled with use of the quench jets resulted in high voidage capillary being extruded. The ultimate voidage depended on the speed at which material is hauled away from the die; various different forms of high voidage capillary extrudate formed from material 1 are shown in Figure 5(B), (C) and (D). Crude optical analysis of the cross section of material similar to those shown in Figure 10 (B) and (C) revealed that voidage between 35% and 40% had been generated. It is highly likely that the high voidage material shown in Figure 10 (D) was in excess of the value of 35% o 40%.

The second phase of the of extrusion experiments were conducted with material 1 using cocoa butter heated to between 35°C and 40°C. The head, h, of the cocoa butter reservoir was initially set to 8 cm, and material two fed into the extruder as described earlier. The initial proof of concept was successful, and resulted in the partial filling of the capillaries with molten cocoa butter. It was observed, however, that due to the increased viscosity of the cocoa butter compared to air, the rate at which cocoa butter could be entrained into the extrudate was slow. This problem appeared to be solved by increasing the head of the reservoir to 21.5 cm. It was also observed qualitatively that, in low voidage form, the cocoa-butter filled capillaries appeared somewhat smaller than their air-filled counterparts (less than 3mm compared to less than 4mm). It was also possible to create high-voidage cocoa-butter filled capillary extrudates, subject to the coca-butter head being high enough to supply molten cocoa butter at the increased rate.

Material 1 was successfully formed into capillary extrudates, of both high and low voidage, with either air-filled capillaries or cocoa butter-filled capillaries. Varying different voidages films were made, and it was observed that increasing levels of voidage led to increasing fragility. A representative figure for one of the high voidage air-cored films was between 35% and 40% and it is estimated that the very high voidage, highly fragile films, exceeded this.

Material 2 was formed from a mixture of 96% maltitol syrup, 2% gum Arabic, 2% water. Material 2 was shown to act in a similar manner to material 1, in that it was supplied in a large block that was required to be broken up mechanically into smaller granules before it could be fed into the extrusion line. Prior to extrusion experiments commencing, the extrusion die was disassembled and washed and the extruder was fed a hot water wash to dissolve any material 1 remaining within the extruder barrels or on the screw. After the water was purged from the extruder, the extruder was heated to 130°C for between five and ten minutes to evaporate any remaining water. An early scoping experiment revealed that material 2 required higher extrusion temperatures than material 1; the final extrusion line temperature profile is shown in Table 3 below.

**Table 3. Extruder temperature profile for material 2.**

| **Temperature zone** | **Label on** **Figure 1** | **Temperature (°C)** |
|---|---|---|
| Barrel zone 1 | T1 | 115 |
| Barrel zone 2 | T2 | 115 |
| Barrel zone 3 | T3 | 115 |
| Die zone 1 | T4 | 115 |
| Die | T5 | 120 |

As with material 1, material 2 was starve-fed into the extruder. As with **material** 1, the screw speed was set to 40 rpm. Material 2 proved to be easy to extrude and capillary extrudates with air-filled capillaries were produced in both low and high voidage forms. Material 2 exhibited good melt strength, good drawing characteristics prior to solidifying and became brittle and glassy upon solidification. Again, this precluded the use of nip rollers to draw the material from the die and control the amount of draw down achieved, hence manual drawing was used in a similar way to material 1. In terms of restarting the extrusion line after an idle period, material 2 did not prove to be noticeably different to material 1, and the line restarted relatively easily. Due to the ease with which capillary extrudates were achieved, phase one was concluded relatively quickly to allow progression to phase two.

Phase two experiments were conducted with material 2 using cocoa butter heated to between 35°C and 40°C. The head, h, of the cocoa butter reservoir was kept at 21.5cm, and material 2 starve-fed into the extruder as described in the previous section. Successful extrusion of both low- and high-voidage micro capillary extrudate from material 2 containing completely filled cocoa-butter capillaries was achieved. A photograph comparing the cocoa-butter filled capillaries of material 2 to the air filled capillaries of material 1 is shown in Figure 6. Crude optical analysis of a cross section of a piece of high-voidage material 2 revealed that the voidage was roughly 35% at minimum. It is likely this figure can be easily increased through optimisation of the protocol.

The observations for material 2 are similar to those from material 1. Low- and high-voidage capillary extrudates were formed, either containing cocoa-butter capillaries or air-filled capillaries. Crude optical analysis of a moderately high-voidage extrudate revealed that the void fraction was approximately 35%. Although, it is thought that the actual figure may have been higher. Increasing product voidage again led to increasing product fragility due to the capillary walls becoming very thin.

The objective of these first and second phase experiments was to provide proof-of-concept for the extrusion of capillary extrudates from various candy materials. This was successful with both materials (material 1 = 40% sugar and 60% glucose, and material 2 = 96% maltitol syrup, 2% gum Arabic and 2% water). Low- and high-voidage capillary extrudates were formed containing both air-filled capillaries and cocoa-butter filled capillaries. It was estimated that a typical high-voidage extrudate contained roughly 35% to 40% voidage whether it was air filled or cocoa-butter filled.

### Example 2

The third phase built upon the first two phases described in Example 1 and recreated the working environment with food grade equipment in a food grade environment. This food-grade setup extruded hard candy, chocolate and chewing gum with air, liquid and solid centres. This range of filled extrudates was made in a food grade environment and was consumed to investigate their edible properties.

The following edible materials were used in these experiments: Chewing gum (uncoated Peppennint-Spearmint Higher flavour chewing gum pellets); hard candy, mint candy (Extra Strong Mints®, Jakemans® Old Favourites), fruit candy (Summer Fruits, Jakemans® Old Favourites), chocolate (milk chocolate (with 0, ½, 1, 2% added water), Cadbury® Dairy Milk® Buttons - when used molten, 2% PGPR was added to lower the melt viscosity for ease of use (c.f. legal limit of ½%)), compound chocolate (Plain Belgian Chocolate, SuperCoolc®), 72% Cook's Chocolate, Green & Black's®. Liquid fillings used in these experiments included: monopropylene glycol (Propane-1,2-diol, BP, EP, USP, Fisher scientific® - selected for low viscosity, zero moisture, low flavour, and BP, EP & USP grade for oral use), Golden Syrup (partially inverted refiners syrup - Tate & Lyle® - selected for higher viscosity, food grade, shelf stability, and sweet flavour), Red Food Colouring (SuperCook®, UK), Blue Food Colouring (SuperCook®, UK). Lastly, a solid filling of cocoa butter obtained internally from a Cadbury Plc. site was also used in these experiments and this was selected because it is solid at room temperature and has low hot viscosity.

A Davis-Standard HPE-075 ¾" 24:1 single-screw extruder was used in these experiments. The extruder also included air-knives and a header tank. The screw was a simple conveying-compression-pumping all forward element design, with no mixing or reversing sections. The motor was 3KW, geared to produce 0-100 rpm screw rotation. The feed throat was jacketed and supplied with flowing ambient water to prevent heat transfer from the barrel causing feed problems with sticky feedstuff. The barrel had three heating zones, each with a 1KW heater and forced ambient air cooler. The standard extruder has a Eurotherm 3216 controller per barrel zone and one spare for the die (die controller connected to thermocouple input and standard 16A 240v socket for up to 1KW heater output).

At point of purchase, two additional die controllers, thermocouple inputs and heater outputs were specified to enable integrated control of the header tank containing filling material and the pipework connecting that header tank to the die. The die was an assembly of parts comprising a body with main die orifice of long thin rectangular shape, through which 19 interconnected nozzles (similar in size to hypodermic needles) also exited. The main body was heated and the nozzles led to an external fitting that could be opened to ambient air or could be connected to the heated, pressurized header tank. A bobbin shaped flange was constructed to mount the die assembly onto the extruder end flange.

The die was heated with 4x 100W ¼" cartridge heaters, and monitored by a K-type thermocouple probe. Initially these were controlled by a Eurotherm 3216 in a bespoke enclosure until the control and power wiring was transferred to a Eurotherm integrated into the extruder. The die assembly was earthed into the power outlet from the extruder.

The header-tank and the pipework connecting the header tank to the die were heated with two 100W ribbon heaters initially controlled from a single analogue controller in a bespoke enclosure, and monitored by a single bare K-type thermocouple. These were later separated to two Eurotherm 3216s integrated into the extruder with two thermocouples and two power supplies. The header tank was earthed to the power outlet, whilst the pipework was plastic and did not need to be earthed.

Compressed air, BOC®, UK was regulated with series 8000 gas regulator and pressures used were 0-10bar. The main use for the compressed air was to supply the air-knives.

Food Safe High-Tech Grease, and Food Safe Penetrating Oil from Solent Lubricants, Leicester, UK were used.

The capillary die was connected on the extruder endplate. Two opposed air knives were used to rapidly quench the extrudate emerging from the extrusion die, were placed above and below the die exit; these jets were connected via a valve to a compressed air line at 10 bar pressure. A schematic diagram showing the general layout of the extrusion line is shown in Figure 1.

In use, the flow of molten material over the tips of the entrainment nozzles (hypodermic needles) caused a small area of low pressure to form at each needle tip. Each nozzle was connected together via internal channelling within the entrainment body. This, in turn, was connected outside the extrusion die to either air at room temperature and pressure or to a header tank containing a liquid that was at ambient or elevated temperature and pressure, with a hydraulic head of h. The header tank and the pipework connecting to the die were externally heated. A set of isolation valves were used to switch between either using an air feed to the entrainment body or a molten cocoa butter feed. This is shown schematically in Figure 2.

The quench jets were used for the generation of the high-voidage material. It had been found during previous research that if the emerging extrudate was quenched very rapidly and subjected to a high drawing force, a higher voidage cross section could be obtained. Adjustment of the polymer and process conditions yielded voidages up to, and possibly in excess of, 60%.

Hard candy was pre-broken before introduction to the extruder. Particle size was not important - the extruder was found to take whole candies or dust. It was found that broken candies fed more evenly than whole pieces. All barrels and the die were set to 95°C for fruit candy. Mint candy had tolerance to a wide range of temperatures and could run with barrels and die at 95° - 110°C.

Screw speeds of 15-100rpm were used in the experiments. Differences in product were minimal (except rate of production). Continuous, complete, transparent films with well formed capillaries could be produced optimisation of the protocol. The films could be filled and/or drawn without leaking. Product morphology was found to change with drawing speed and rate of cooling inline. Fast drawing with no cooling could thin the films to 1mm wide with microscopic width and capillaries. Drawing with heavy cooling enlarged the voidage in the films.

In another test, uncoated gum pellets were reduced in size to approximately 3mm to aid feeding into the extruder. This was done with freezing and a domestic food processor. Barrel and die temperatures of 58°C resulted in the most contiguous product. This product had sufficient integrity to be filled with few leaks. It is likely that using gum base, in particular molten gum base, rather than whole gum would produce films with even greater integrity.

In a further test, chocolate was used as material for extrusion. To gain stable running conditions, the heaters and cooling fans of the extruder were electrically disabled. Direct temperature control was abandoned in favour of relying on the air conditioning of the laboratory. With these modifications the extruder barrel indicated an even 22°C and it was simple to extrude capillary chocolate in a steady state using molten tempered Cadbury's Dairy Milk® chocolate.

As with hard candy extrusion, it was possible to draw the chocolate extrudate so as to alter the cross sectional geometry, and produce capillaries having diameters or widths of between 0.5mm and 4mm.

Air filling was achieved through a simple ambient air-bleed to the nozzles in the die and a cross section of the extrudate is shown in Figure 8.

Monopropylene glycol filling was achieved at ambient temperature and pressure, with approximately 5cm liquid depth in the header tank which was in turn approximately 10cm higher than the die. Colour was added directly into the header tank as and when required.

Golden Syrup filling was achieved by heating the header tank and pipework to 78°C to fill hard candy, and 58°C to fill gum. Pressurisation of the header tank was required at the lower temperature to generate syrup flow. Again, colour was added directly into the header tank as and when required.

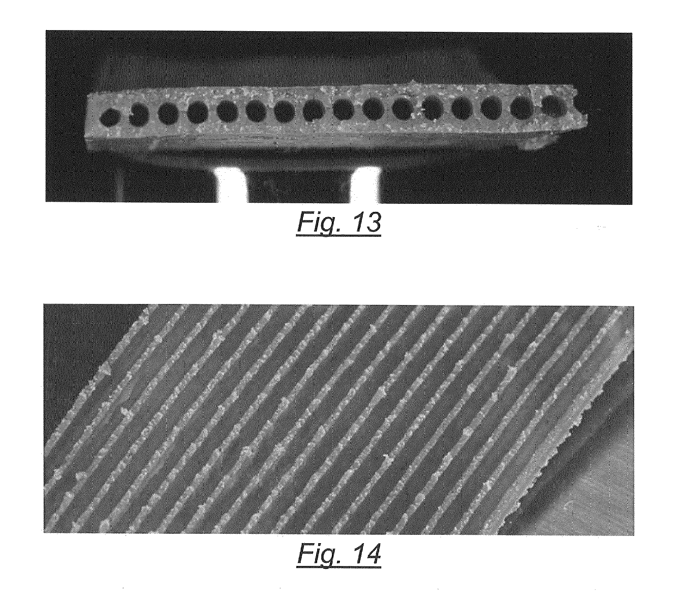

Figures 8-14 shows photographs of extrusions formed in the third phase of experiments. Figure 8 shows a hard candy with an air fill. Figure 9 shows a hard candy with a liquid fill. Figure 9 shows a gum with an air fill. Figure 10 shows a gum with a liquid fill. Figure 11 shows a chocolate with an air fill. Figure 12 shows a chocolate with an air fill as shown in Figure 11, but in longitudinal cross section.

### Example 3

The fourth phase of extrusion work demonstrates the preparation of confectionery products with an extruded body portion comprising a chewy candy composition and a plurality of capillaries comprising a hard boiled candy composition. The extruded body material and the capillary material differ in flexural modulus by more than 10%.

An illustrative chewy candy composition is presented in Table 4, with amount weight percent values expressed relative to the total weight of initial composition (before heating). To prepare the chewy candy composition, the granulated sugar is combined with about four-fifths of the water. The glucose syrup, the gelatine solution, the melted fat, and the remaining water are separately combined. The granulated sugar mixture and the glucose syrup mixture are combined with each other, and the resulting mixture is heated at about 115°C and an absolute pressure of about 0.7 bar. The remaining components are then mixed in via an in-line mixer, and the resulting mixture is cooled to about 50°C for the extrusion process.

**Table 4. Chewy candy composition for extruded body portion.**

| **Component** | **Amount (weight percent)** |
|---|---|
| Granulated sugar | 30-40% |
| Water | 10-20% |
| Glucose syrup, 44 Be | 30-40% |
| Gelatine solution (36.5 weight percent) | 0.5-1.5% |
| Melted fat | 2-3% |
| Strawberry flavour | 0.4-1% |
| Red colouring | 0.1-0.5% |
| Fondant | 2-5% |
| Citric acid monohydrate | 0.5-2% |

An illustrative hard candy composition is presented in Table 5. To prepare the hard candy composition, the erythritol and xylitol are dry mixed, transferred to a mixing vessel, and heated with mixing to a temperature of about 125°C, which is sufficient to melt the mixture. The remaining components are added to the molten mixture, and the resulting mixture is cooled to 80°C for the extrusion process.

**Table 5. Hard candy composition for capillaries.**

| **Component** | **Amount (weight percent)** |
|---|---|
| Erythritol | **60-75%** |
| Xylitol | 25-35% |
| Blue colouring | 0.001-0.5% |
| Citric acid, 50% solution | 1-3% |
| Emulsifier | 0.01-0.2% |

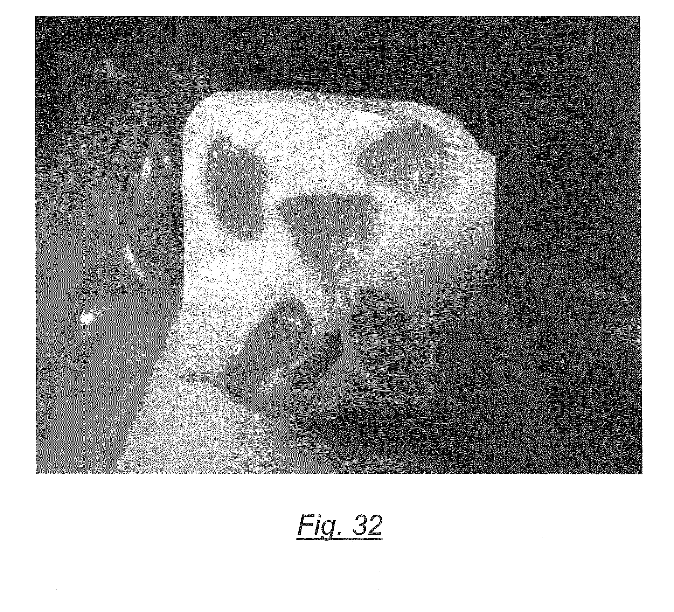

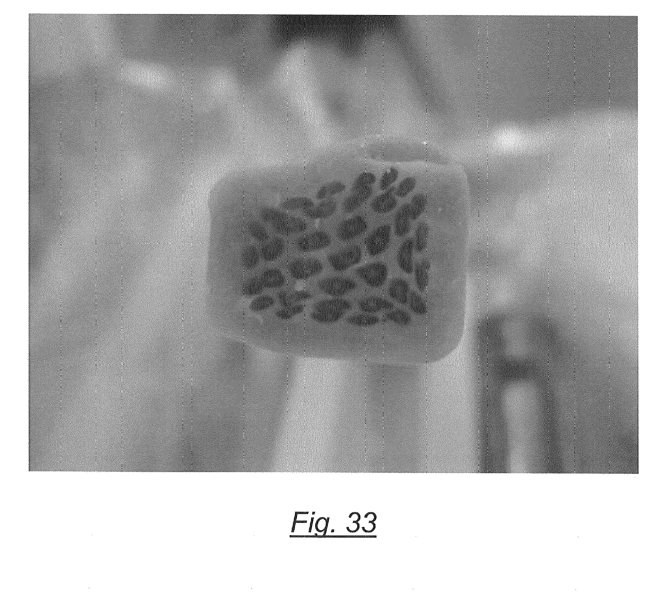

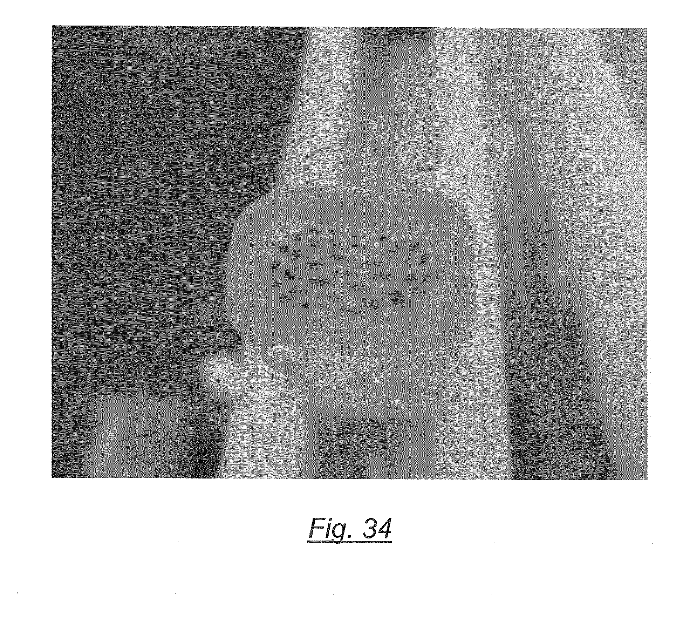

The chewy candy composition and the hard candy composition, each in a liquid state, are coextruded to form a rope such that the extruded chewy candy composition forms an extruded body portion and the extruded hard candy composition formes capillaries disposed in the extruded body portion. The rope is cooled until the chewy candy composition and the hard candy composition are no longer liquid. Then the rope is cut into pieces to form the finished confectionery product. Images of cross sections of three confectionery products formed by the method are shown in Figures 32-34, which correspond to capillary diameters of about 1.6 millimetres, 1.1 millimetres, and 0.7 millimetres, respectively.

Confectionery products and methods of the invention have been shown for chocolate, hard candy and gum. The experiments of the third phase had shown a range of food materials that can also be used. It could therefore be deduced that any product normally solid at room temperature yet extrudable at elevated temperature and pressure could be formed into a capillary product such as chewy, gummy or jelly candies, for example. Products that show high extensional viscosity when warm may be drawn to alter their geometry and their outer to inner ratio.

It has also been shown that air, liquid and solid centres can be incorporated into capillary extrusions, providing the solid centre can be liquefied and is flowable.

It will be apparent to the skilled addressee that the capillary extrudate produced in the examples could be employed in confectionery in a number of ways. For example, a chocolate extrudate having capillaries filled with air could be used to manufacture a chocolate bar having a similar size to a regular bar, but lower in fat and sugar - as it contains less material. Alternatively, a chocolate extrudate could have capillaries filled with a liquid chocolate filling so as to provide an enhanced sensory pleasure. A further example may be a milk chocolate extrudate having capillaries filled with a dark chocolate filling, so as to produce a different flavour profile.

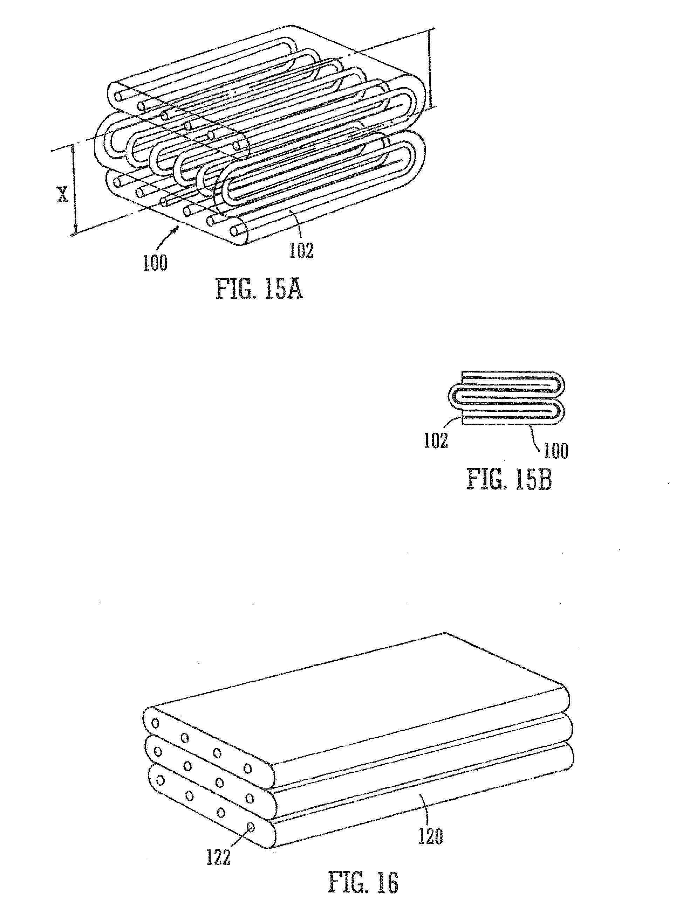

The extrudates of the present invention could be configured in a number of ways. For example, Figures 15A and 15B show an extrudate 100 having centre filled capillaries 102, where the extrudate is folded back on itself several times. Such a configuration would enable an extended release of centre fill during chewing. A chocolate éclair could be formed having a chewy centre having liquid filled capillaries - where the chewy centre was a folded several times so as to enable the liquid fill to be released over an extended period.

Figure 16 shows multiple layers of extrudate 120 being stacked on top of one another and each stack having a plurality of capillaries 122 with a centre filling. Such an arrangement could also be employed in a chewy confectionery.

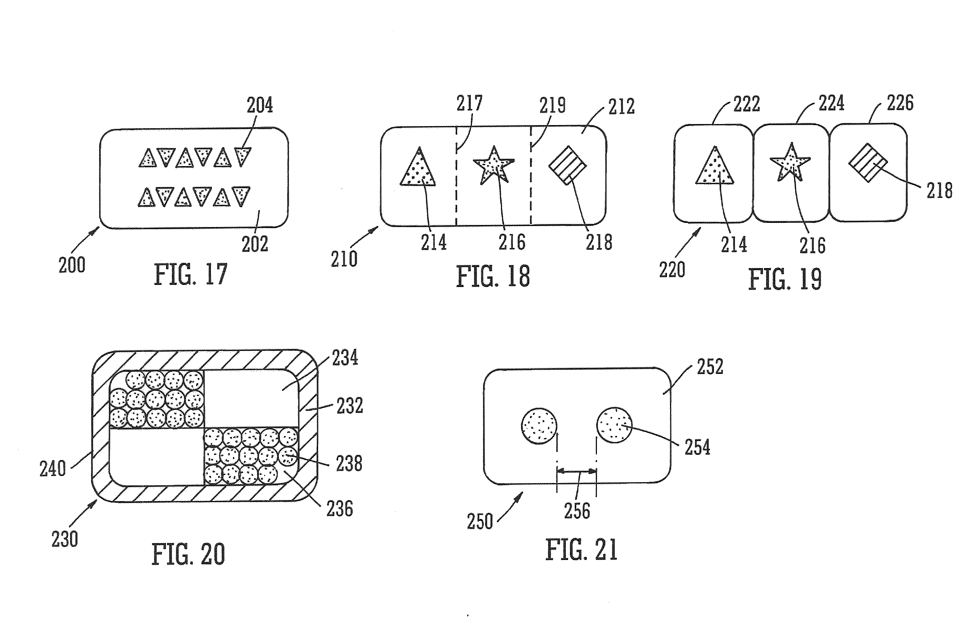

With reference to Figure 17, a confectionery product 200 is shown which has an extruded body 202, formed from a candy material. Within the extruded body 202 is located a number of parallel capillaries 204 containing liquid fondant. The capillaries 204 have a triangularly shaped cross-section and are arranged such that one side of each triangular edge is maintained equidistant from an adjacent capillary so as to form a row of capillaries which are evenly spaced apart from one another.

Referring now to Figure 18, there is shown a confectionery product 210 which has an extruded body 212 formed from a candy material. Disposed within the extruded body are three capillaries, all of which have differently shaped cross-sections and all of which contain differently flavoured liquid fondants. The first capillary 214 has a triangular shaped cross-section and is filled with a strawberry flavoured liquid fondant, the second capillary 216 has a star shaped cross-section and is filled with a lime flavoured liquid fondant, whereas the third capillary 218 has a square shaped cross-section filled with a raspberry liquid fondant.

Additionally, the extruded body 212 is provided with some form of portioning means, such as lines of weakness 217, 219 which allows the customer to separate parts of the body containing different capillaries from each other. The lines of weakness 217,219 may be formed during extrusion or introduced after extrusion. This confectionery product not only produces a burst of different flavours in the mouth when consumed, but also provides a product with a novel and attractive centre. Furthermore, by allowing the product to be portioned, if desired, the customer is able to share or choose which flavour is to be consumed.

With reference to Figure 19, there is shown a confectionery product having the similar features as to that shown in Figure 18 and similar features are denoted with the same reference numeral prime ('). However, rather than having lines of wealcness 217,219, the extruded body is formed into first 222, second 224 and third 226 portions within which are disposed the first 214', second 216' and third 218' capillaries. The portions can be separated from each other easily if desired.

Figure 20 shows another confectionery product 230 which has an extruded body portion 232 made from a candy material. The cross-section of the extruded body portion is divided into four equal zones. A first set of two diagonally opposed zones 234 is formed simply of, the candy material, whereas a second set of two diagonally opposed zones 236 contain a plurality of parallel capillaries 238 which are filled with a liquid fondant. A coating layer of chocolate 240 surrounds the extruded body portion. When consumed, the different zones of the confectionery product produces pleasant sensory mouth feel with the chocolate melting initially, followed by the release of the liquid fondant at the same time as the candy softening and dissolving in the mouth.

Figure 21 shows a confectionery product 250 which has an extruded body portion 252, within which are disposed capillaries 254 containing a liquid fondant. The space 256 between the capillaries is equal to the thickness to that of the width or diameter of the capillaries.

Figure 22 is a photograph of a matrix extrusion die that can be used to form capillaries in extruded materials in accordance with some embodiments of the present invention.

Figure 23 is a photograph of a circular extrusion die that can be used to form capillaries in extruded materials in accordance with some embodiments of the present invention.

Figure 24 is a photograph of a different view of the circular extrusion die shown in the photograph of Figure 23.

Figure 25 is a longitudinal cross-sectional view of a portion of a confectionery product 300 comprising an extruded body portion 310, a single bisected capillary 320 disposed in the extruded body portion 310, and multiple fibres 330 partially filling the capillary 320.

Figure 26 is a perspective view of a confectionery product 400 comprising an extruded body portion 410 and a plurality of capillaries 420 disposed in the extruded body portion 410.

Figure 27 is a perspective view of a confectionery product 500 comprising a first confectionery layer 505, a second confectionery layer 515, and a third confectionery layer 508 between and in contact with the first confectionery layer 505 and the second confectionery layer 515. The third confectionery layer 508 comprises an extruded body portion 510 and a plurality of capillaries 520 disposed in the extruded body portion 510.

Figure 28 is a cross-sectional view of a confectionery product 600 that is a chewing gum product comprising an extruded body portion 610, first capillaries 620 distributed around the periphery of the extruded body portion, and second capillaries 630 interior to the first capillaries 620.

Figure 29 is a cross-sectional view of a confectionery product 700 comprising an extruded body portion 710, first capillaries 720 distributed randomly in the extruded body portion 710, and second capillaries 730 distributed randomly in the extruded body portion 710.

Figure 30 is a cross-sectional view of a the confectionery product 800 comprising an extruded body portion 810, a plurality of capillaries 820 disposed in the extruded body portion 810, and a chocolate layer 830 surrounding the extruded body portion.

Figure 31 provides cross-sectional views of two chocolate confectionery products. In Figure 31(a), chocolate confectionery product 900 comprises an extruded body portion 910 characterized by a non-circular (triangular) cross-sectional shape, and a plurality of capillaries 920 disposed in the extruded body portion 1010 and characterized by a non-circular (triangular) cross-sectional shape approximating the cross-sectional shape of the extruded body portion 1010. In Figure 31(b), chocolate confectionery product 1000 comprises an extruded body portion 1010 characterized by a non-circular (six-pointed star) cross-sectional shape, and a plurality of capillaries 1020 disposed in the extruded body portion 1010 and characterized by a non-circular (six-pointed star) cross-sectional shape approximating the cross-sectional shape of the extruded body portion 1010.

Figures 32-34 are images of cross sections of three confectionery products formed as described in Example 3 and corresponding, respectively, to capillary diameters of about 1.6 millimetres, 1.1 millimetres, and 0.7 millimetres.

Although the body portion and capillaries may be depicted as uniform in shape and pattern in some embodiments described herein, it should be understood that the body portion and/or the capillaries may be non-uniform in some embodiments. There may be variations in the overall dimensions of the product, such as, for instance, the dimensions of the body portion, the capillaries, the wall thicknesses between each capillary and the outer wall thickness of the product. For example, in some embodiments, the mechanical process of extrusion and optional further manipulation of the extrudate, such as stretching, may create non-uniformities in the dimensions of the product. Such processes also may create random variations in the positioning of the capillaries. The capillaries accordingly may be irregularly positioned in some embodiments. In addition, the capillaries may be symmetrically disposed in the body portion or asymmetrically disposed in the body portion. In some embodiments, one group of capillaries may be symmetrically disposed and another group of capillaries may be asymmetrically disposed in the body portion.

The foregoing embodiments are not intended to limit the scope of protection afforded by the claims, but rather to describe examples as to how the invention may be put into practice.

### Annex

Item 1: A confectionery product, comprising:
an extruded body portion; and
a plurality of capillaries disposed in the extruded body portion;
wherein one or more of the capillaries is characterized by a capillary width or diameter and is partially filled with fibres comprising a bulk sweetener; and
wherein the fibres are characterized by a fibre width or diameter that is about 1% to about 70% of the capillary width or diameter.

Item 2: The confectionery product of item 1, wherein the plurality of capillaries has a volume of about 5 to about 40% of the total volume of the extruded body portion and the plurality of capillaries.

Item 3: The confectionery product of item 1 or 2, wherein the capillaries have a width or diameter of about 0.1 to about 5 millimetres.

Item 4: The confectionery product of any of items 1-3, wherein a distance of about 0.1. to about 3 millimetres separates a capillary from an adjacent capillary.

Item 5: The confectionery product of any of items 1-4, wherein the fibres have an average diameter of about 1 to about 300 micrometres.

Item 6: The confectionery product of any of items 1-5, wherein the fibres have an average length of at least 1 centimetre.

Item 7: The confectionery product of any of items 1-6, wherein the bulk sweetener is selected from the group consisting of monosaccharides, disaccharides, polysaccharides, sugar alcohols, polydextrose, maltodextrins, and mixtures thereof.

Item 8: The confectionery product of any of items 1-7, wherein the bulk sweetener comprises xylitol.

Items 9: A confectionery product, comprising:
an extruded body portion; and
a plurality of capillaries disposed in the extruded body portion;
wherein one or more of the capillaries is at least partially filled with a fill material that exhibits a colour change when the confectionery product is consumed.

Items 10: The confectionery product of item 9, wherein the plurality of capillaries has a volume of about 5 to about 40% of the total volume of the extruded body portion and the plurality of capillaries.

Item 11: The confectionery product of item 9 or 10, wherein the capillaries have a width or diameter of about 0.1 to about 5 millimetres.

Item 12: The confectionery product of any of items 9-11, wherein a distance of about 0.1 to about 3 millimetres separates a capillary from an adjacent capillary.

Item 13: The confectionery product of any of items 9-12, wherein the fill material comprises carminic acid or a food grade salt thereof.

Item 14: The confectionery product of any of items 9-12, wherein the fill material comprises an anthocyanin or a food grade salt thereof.

Item 15: The confectionery product of any of items 9-14, wherein the extruded body portion comprises a food grade acid.

Item 16: A confectionery product, comprising:
an extruded body portion; and
a plurality of capillaries disposed in the extruded body portion;
wherein one or more of the capillaries is at least partially filled with a gasified confectionery composition.

Item 17: The confectionery product of item 16, wherein the plurality of capillaries has a volume of about 5 to about 40% of the total volume of the extruded body portion and the plurality of capillaries.

Item 18: The confectionery product of item 16 or 17, wherein the capillaries have a width or diameter of about 0.1 to about 5 millimetres.

Item 19: The confectionery product of any of items 16-18, wherein a distance of about 0.1 to about 3 millimetres separates a capillary from an adjacent capillary.

Item 20: The confectionery product of any of items 16-19, wherein the gasified confectionery composition is provided as a slurry or dispersion of the-gasifed confectionery composition in a food grade fat.

Item 21: A confectionery product, comprising:
a first confectionery layer;
a second confectionery layer; and
a third confectionery layer between and in contact with the first and second confectionery layers;
wherein the third confectionery layer comprises
   an extruded body portion, and
   a plurality of capillaries disposed in the extruded body portion.

Item 22: The confectionery product of item 21, wherein the plurality of capillaries has a volume of about 5 to about 40% of the total volume of the extruded body portion and the plurality of capillaries.

Item 23: The confectionery product of item 21 or 22, wherein the capillaries have a width or diameter of about 0.1 to about 5 millimetres.

Item 24: The confectionery product of any of items 21-23, wherein a distance of about 0.1 to about 3 millimetres separates a capillary from an adjacent capillary.

Item 25: A chewing gum product, comprising:
an extruded body portion; and
a plurality of capillaries disposed in the extruded body portion;
wherein the extruded body portion comprises a chewing gum composition; and
wherein one or more of the capillaries is at least partially filled with a fill material comprising at least 20 weight percent fat.

Item 26: The chewing gum product of item 25, wherein the plurality of capillaries has a volume of about 5 to about 40% of the total volume of the extruded body portion and the plurality of capillaries.

Item 27: The chewing gum product of item 25 or 26, wherein the capillaries have a width or diameter of about 0.1 to about 5 millimetres.

Item 28: The chewing gum product of any of items 25-27, wherein a distance of about 0.1 to about 3 millimetres separates a capillary from an adjacent capillary.

Item 29: The chewing gum product of any of items 25-28, wherein the fat has a melting point of less than or equal to 40°C.

Item 30: The chewing gum product of any of items 25-29, wherein the fat comprises cocoa butter, milk fat, palm oil or a fraction thereof, lauric oil or a fraction thereof, or a mixture thereof.

Item 31: The chewing gum product of any of items 25-30, wherein the fat comprises cocoa butter.

Item 32: A chewing gum product, comprising:
an extruded body portion; and
a plurality of capillaries disposed in the extruded body portion;
wherein the extruded body portion comprises a first gum base composition; and
wherein one or more of the capillaries comprises a second gum base composition different from the first gum base composition.

Item 33: The chewing gum product of item 32, wherein the plurality of capillaries has a volume of about 5 to about 40% of the total volume of the extruded body portion and the plurality of capillaries.

Item 34: The chewing gum product of item 32 or 33, wherein the capillaries have a width or diameter of about 0.1 to about 5 millimetres.

Item 35: The chewing gum product of any of items 32-34, wherein a distance of about 0.1 to about 3 millimetres separates a capillary from an adjacent capillary.

Item 36: The chewing gum product of any of items 32-35, wherein the first gum base composition has a first texture, and the second gum base composition has a second texture different from the first texture.

Item 37: A confectionery product, comprising:
an extruded body portion; and
a plurality of capillaries disposed in the extruded body portion;
wherein the extruded body portion comprises a confectionery composition having a first flexural modulus measured at 25°C according to ASTM D790; and
wherein one or more of the capillaries is at least partially filled with a fill material having a second flexural modulus measured at 25°C according to ASTM D790;
wherein the second flexural modulus is at least 10% greater than the first flexural modulus.

Item 38: The confectionery product of item 37, wherein the confectionery composition is a chewing gum composition.

Item 39: The confectionery product of item 37 or 38, wherein the confectionery composition is a chewy candy composition.

Item 40: The confectionery product of any of items 37-39, wherein the fill material comprises a hard boiled candy composition.

Item 41: The confectionery product of any of items 3 7-40, wherein the plurality of capillaries has a volume of about 5 to about 40% of the total volume of the extruded body portion and the plurality of capillaries.

Item 42: The confectionery product of any of items 37-41, wherein the capillaries have a width or diameter of about 0.1 to about 5 millimetres.

Item 43: The confectionery product of any of items 37-42, wherein a distance of about 0.1 to about 3 millimetres separates a capillary from an adjacent capillary.

Item 44: A chewing gum product, comprising:
an extruded body portion; and
a plurality of capillaries disposed in the extruded body portion;
wherein the extruded body portion comprises a chewing gum composition; and
wherein one or more of the capillaries is at least partially filled with a gummy confectionery composition.

Item 45: The chewing gum product of item 44, wherein the plurality of capillaries has a volume of about 5 to about 40% of the total volume of the extruded body portion and the plurality of capillaries.

Item 46: The chewing gum product of item 44 or 45, wherein the capillaries have a width or diameter of about 0.1 to about 5 millimetres.

Item 47: The chewing gum product of any of items 44-46, wherein a distance of about 0.1 to about 3 millimetres separates a capillary from an adjacent capillary.

Item 48: A chewing gum product, comprising:
an extruded body portion; and
a plurality of capillaries disposed in the extruded body portion;
wherein the extruded body portion comprises a chewing gum composition and an exposed surface;
wherein the plurality of capillaries comprises a first group of capillaries distributed around the periphery of the extruded body portion and a second group of capillaries distributed interior to said first group;
wherein the first group of capillaries comprises a first confectionery composition comprising a first flavour; and
wherein the second group of capillaries comprises a second confectionery composition comprising a second flavour different from the first flavour.

Item 49: The chewing gum product of item 48, wherein the plurality of capillaries has a volume of about 5 to about 40% of the total volume of the extruded body portion and the plurality of capillaries.

Item 50: The chewing gum product of item 48 or 49, wherein the first group of capillaries and/or the second group of capillaries has a capillary width or diameter of about 0.1 to about 5 millimetres.

Item 51: The chewing gum product of any of items 48-50, wherein the first group of capillaries and/or the second group of capillaries has a distance of about 0.1 to about 3 millimetres separating a capillary from an adjacent capillary of the same group.

Item 52: A chewing gum product, comprising:
an extruded body portion; and
a plurality of capillaries disposed in the extruded body portion;
wherein the extruded body portion comprises a chewing gum composition; and
wherein one or more of the capillaries is at least partially filled with a fill material capable of expanding when chewed.

Item 53: The chewing gum product of item 52,
wherein the fill material comprises sodium bicarbonate, potassium bicarbonate, ammonium bicarbonate, sodium carbonate, potassium carbonate, or a mixture thereof; and
wherein the extruded body portion comprises citric acid, tartaric acid, fumaric acid, adipic acid, malic acid, or a mixture thereof.

Item 54: The chewing gum product of item 52, wherein the fill material comprises a gasified confectionery material.

Item 55: The chewing gum product of any of items 52-54, wherein the fill material comprises carbamide peroxide.

Item 56: The chewing gum product of any of items 52-55, wherein the plurality of capillaries has a volume of about 5 to about 40% of the total volume of the extruded body portion and the plurality of capillaries.

Item 57: The chewing gum product of any of items 52-56, wherein the capillaries have a width or diameter of about 0.1 to about 5 millimetres.

Item 58: The chewing gum product of any of items 52-57, wherein a distance of about 0.1 to about 3 millimetres separates a capillary from an adjacent capillary.

Item 59: A chocolate confectionery product, comprising:
an extruded body portion; and
a plurality of capillaries disposed in the extruded body portion;
wherein the extruded body portion comprises a body portion confectionery composition comprising cocoa solids and characterized by a body portion melting temperature;
wherein the plurality of capillaries comprises a first group of at least two capillaries at least partially filled with a first capillaries confectionery composition and characterized by a first capillaries melting temperature different from the body portion melting temperature; and
wherein the plurality of capillaries comprises a second group of at least two capillaries, different from the first group of at least two capillaries, at least partially filled with a second capillaries confectionery composition and characterized by a second capillaries melting temperature different from the body portion melting temperature and the first capillaries melting temperature.

Item 60: The chocolate confectionery product of item 59, wherein the plurality of capillaries has a volume of about 5 to about 40% of the total volume of the extruded body portion and the plurality of capillaries.

Item 61: The chocolate confectionery product of item 59 or 60, wherein the first group of capillaries and/or the second group of capillaries has a capillary width or diameter of about 0.1 to about 5 millimetres.

Item 62: The chocolate confectionery product of any of items 59-61, wherein the first group of capillaries and/or the second group of capillaries has a distance of about 0.1 to about 3 millimetres separating a capillary from an adjacent capillary of the same group.

Item 63: A method of forming a chocolate confectionery product, comprising:
extruding a confectionery material to form
   an extruded body portion; and
   a plurality of capillaries disposed in the extruded body portion;
cutting the extrudate to form a rope; and
processing the rope in a ball former to form individual pieces of chocolate confectionery product.

Item 64: The method of item 63, wherein the plurality of capillaries has a volume of about 5 to about 40% of the total volume of the extruded body portion and the plurality of capillaries.

Item 65: The method of item 63 or 64, wherein the capillaries have a width or diameter of about 0.1 to about 5 millimetres.

Item 66: The method of any of items 63-65, wherein a distance of about 0.1 to about 3 millimetres separates a capillary from an adjacent capillary.

Item 67: A chocolate confectionery product, comprising:
an extruded body portion; and
a plurality of capillaries disposed in the extruded body portion;
wherein the extruded body portion comprises a body portion confectionery composition comprising cocoa solids;
wherein one or more of the capillaries is at least partially filled with a fill material comprising hazelnut flavour

Item 68: The chocolate confectionery product of item 67, wherein the plurality of capillaries has a volume of about 5 to about 40% of the total volume of the extruded body portion and the plurality of capillaries.

Item 69: The chocolate confectionery product of item 67 or 68, wherein the capillaries have a width or diameter of about 0. to about 5 millimetres.

Item 70: The chocolate confectionery product of any of items 67-69, wherein a distance of about 0.1 to about 3 millimetres separates a capillary from an adjacent capillary.

Item 71: A chocolate confectionery product, comprising:
an extruded body portion; and
a plurality of capillaries disposed in the extruded body portion;
wherein the extruded body portion comprises a confectionery composition comprising a coconut flavour; and
a chocolate layer at least partially surrounding the extruded body portion; wherein the chocolate layer comprises a chocolate composition comprising cocoa solids; and
wherein one or more of the capillaries is at least partially filled with a fill material comprising cherry flavour.

Item 72: The chocolate confectionery product of item 71, wherein the plurality of capillaries has a volume of about 5 to about 40% of the total volume of the extruded body portion and the plurality of capillaries.

Item 73: The chocolate confectionery product of item 71 or 72, wherein the capillaries have a width or diameter of about 0.1 to about 5 millimetres.

Item 74: The chocolate confectionery product of any of items 71-73, wherein a distance of about 0.1 to about 3 millimetres separates a capillary from an adjacent capillary.

Item 75: A chocolate confectionery product, comprising:
an extruded body portion; and
a plurality of capillaries disposed in the extruded body portion;
wherein the extruded body portion comprises a confectionery composition comprising cocoa solids;
wherein the extruded body portion is characterized by a non-circular cross-sectional shape; and
wherein one or more of the capillaries is characterized by a non-circular cross-sectional shape approximating the cross-sectional shape of the extruded body portion.

Item 76: The chocolate confectionery product of item 75, wherein the non-circular cross-sectional shape of the extruded body portion and the non-circular cross-sectional shape of the one or more of the capillaries are non-square.

Item 77: The chocolate confectionery product of item 75 or 76, wherein the non-circular cross-sectional shape of the extruded body portion and the non-circular cross-sectional shape of the one or more of the capillaries are polygons having at least five sides.

Item 78: The chocolate confectionery product of any of items 75-77, wherein the plurality of capillaries has a volume of about 5 to about 40% of the total volume of the extruded body portion and the plurality of capillaries.

Item 79: The chocolate confectionery product of any of items 75-78, wherein the capillaries have a width or diameter of about 0.1 to about 5 millimetres.

Item 80: The chocolate confectionery product of any of items 75-79, wherein a distance of about 0.1 to about 3 millimetres separates a capillary from an adjacent capillary.

Item 81: A packaged chocolate confectionery product, comprising:
an extruded body portion;
a plurality of capillaries disposed in the extruded body portion; and
a dispensing package containing the extruded body portion and the plurality of capillaries;
wherein the extruded body portion comprises a first confectionery composition comprising cocoa solids;
wherein the first confectionery composition has a viscosity of about 100,000 to about 1,000,000 centipoise at 25°C;
wherein one or more of the capillaries is at least partially filled with a second confectionery composition different from the first confectionery composition; and
wherein the second confectionery composition has a viscosity of about 5,000 to about 1,000,000 centipoise at 25°C.

Item 82: The packaged chocolate confectionery product of item 81, wherein the plurality of capillaries has a volume of about 5 to about 40% of the total volume of the extruded body portion and the plurality of capillaries.

Item 83: The packaged chocolate confectionery product of item 81 or 82, wherein the capillaries have a width or diameter of about 0.1 to about 5 millimetres.

Item 84: The packaged chocolate confectionery product of any of items 81-83, wherein a distance of about 0.1 to about 3 millimetres separates a capillary from an adjacent capillary.

Item 85: The packaged chocolate confectionery product of any of items 81-84, wherein the dispensing package comprises a flexible tube.

Item 86: The packaged chocolate confectionery product of any of items 81-84, wherein the dispensing package comprises a pump.

Item 87: The packaged chocolate confectionery product of any of items 81-86, wherein the second confectionery composition comprises a flavour selected from the group consisting of chocolate flavour, cherry flavour, hazelnut flavour, mint flavour, coffee flavour, cinnamon flavour, vanilla flavour, orange flavour, chilli flavour, and combinations thereof.

Item 88: A chewing gum product, comprising:
an extruded body portion; and
a plurality of capillaries disposed in the extruded body portion;
wherein the extruded body portion comprises a gum base composition comprising an elastomer; and
wherein one or more of the capillaries is at least partially filled with an elastomer-free fill material.

Item 89: The chewing gum product of item 88, wherein the gum base composition further comprises at least one component selected from the group consisting of elastomer plasticizers, resins, fats, oils, waxes, softeners, fillers, and combinations thereof.

Item 90: The chewing gum product of item 88 or 89, wherein the elastomer-free fill material comprises at least one component selected from the group consisting of softeners, bulk sweeteners, high intensity sweeteners, flavouring agents, syrups, sensates, acids, potentiators, colorants, and functional ingredients.

Item 91: The chewing gum product of any of items 88-90, wherein the gum base composition has a 25°C water solubility less than or equal to 1 gram per litre; and wherein the elastomer-free fill material has a 25°C water solubility of at least 10 grams per litre.

Item 92: The chewing gun product of any of items 88-91, wherein the plurality of capillaries has a volume of about 5 to about 40% of the total volume of the extruded body portion and the plurality of capillaries.

Item 93: The chewing gum product of any of items 88-92, wherein the capillaries have a width or diameter of about 0.1 to about 5 millimetres.

Item 94: The chewing gum product of any of items 88-93, wherein a distance of about 0.1 to about 3 millimetres separates a capillary from an adjacent capillary.

## Claims

1. A confectionery product comprising an extruded body portion having a plurality of capillaries disposed therein, wherein each capillary is separated from each adjacent capillary by a wall formed from the extruded body portion, and wherein the wall between each capillary has a thickness of no more than the width or diameter of the capillaries.

2. The confectionery product of claim 1, wherein the plurality of capillaries is from 5 to 50 capillaries.

3. The confectionery product of claim 1 or 2, wherein the capillaries have an average diameter or width of 0.1 to 5 millimetres.

4. The confectionery product of claim 3, wherein the capillaries have an average diameter or width of 0.1 to 1 millimetre.

5. The confectionery product of any of claims 1-4, wherein the wall between each capillary has a thickness of 0.1 to 3 millimetres.

6. The confectionery product of claim 5, wherein the wall between each capillary has a thickness of 0.1 to 2.5 millimetres.

7. The confectionery product of claim 6, wherein the wall between each capillary has a thickness of 0.1 to 1 millimetre.

8. The confectionery product of any of claims 1-7, wherein the extruded body portion is chewing gum, bubble gum, or gum base.
